# EUROPEAN PATENT APPLICATION

(11) **EP 4 184 805 A1**
(43) Date of publication of application: **24.05.2023**
(21) Application number: 20947292.7
(22) Date of filing: 31.07.2020
(51) Int. Cl.: H04B 7/185, H04W 16/14

(54) **COMMUNICATION METHOD AND COMMUNICATION APPARATUS**

(71) Applicant: Huawei Technologies Co., Ltd., Shenzhen, Guangdong 518129 (CN)
(72) Inventor: LIU, Jianghua, Shenzhen, Guangdong 518129 (CN); DAI, Xizeng, Shenzhen, Guangdong 518129 (CN); YU, Zheng, Shenzhen, Guangdong 518129 (CN)
(74) Representative: Maiwald GmbH
(86) International application number: PCT/CN2020/106454
(87) International publication number: WO 2022/021447

(57) **Abstract**

A communication method and a communication apparatus are provided. The communication method provided in embodiments of this application includes: A first device determines a first link resource, where the first link resource is used for sending information to a first terminal by the first device; and the first device determines a sixth link resource, where the sixth link resource is used, by the first device, for receiving information sent by a third terminal, where the first link resource has a same frequency resource as the sixth link resource; and the first device belongs to a first communication system.

## Description

### TECHNICAL FIELD

Embodiments of this application relate to the communication field, and in particular, to a communication method and a communication apparatus.

### BACKGROUND

A current communication system may include nodes that communicate with each other. For example, the communication system may include two devices, where one device communicates with the other device, and the other device is a peer device for communication with the device. For example, the other device may be referred to as a terminal. For example, a device in a cellular communication system may be a network device, and a terminal in the cellular communication system may be user equipment.

The communication system may be a cellular communication system. For example, the cellular communication system may include a 5^{th} generation (5^{th} generation, 5G) mobile communication system and a future evolved system thereof. Data transmission between a device and a terminal in the communication system needs to meet requirements for indicators such as a peak rate, a user experienced rate, spectral efficiency, mobility, a delay, a connection density, network energy efficiency, and regional traffic. The peak rate and the user experienced rate are key technical capabilities of the 5G mobile communication system and the future evolved system thereof. With continuous service growth and continuous evolution of the 5G mobile communication system, more spectrums are required in the future to provide more spectrum resources and communication bandwidths, to meet requirements of 5G and the future evolved system thereof for key technical capabilities such as the peak rate, the user experienced rate, and a system capacity.

Mainstream spectrums of the current 5G mobile communication system are spectrum resources of 3.5 gigahertz (Gigahertz, GHz) and 4.4 GHz to 5 GHz, key spectrums below 6 GHz are basically allocated, and it is difficult to have large-bandwidth spectrum resources. However, the large-bandwidth spectrum resources are central to achieving the key technical capabilities such as the peak rate, the user experienced rate, and the system capacity.

How to allocate more resources to devices and terminals in a communication system is still a problem to be resolved at present.

### SUMMARY

Embodiments of this application provide a communication method and a communication apparatus, so that a device and a terminal can use more resources.

To resolve the foregoing technical problem, embodiments of this application provide the following technical solutions.

According to a first aspect, an embodiment of this application provides a communication method, including: A first device determines a first link resource, where the first link resource is used for sending information to a first terminal by the first device; and the first device determines a sixth link resource, where the sixth link resource is used, by the first device, for receiving information sent by a third terminal, where the first link resource has a same frequency resource as the sixth link resource; and the first device belongs to a first communication system.

In some embodiments of this application, the first device belongs to the first communication system. The first device may determine a first link resource, where the first link resource is used for sending information to the first terminal by the first device. In addition, the first device may determine a sixth link resource, where the sixth link resource is used, by the first device, for receiving information sent by the third terminal, where the first link resource has a same frequency resource as the sixth link resource. In other words, the first link resource and the sixth link resource may share the same frequency resource. For example, the first link resource has a frequency resource completely the same as that of the sixth link resource, or the first link resource has a frequency resource partially the same as that of the sixth link resource. In the resource sharing manner of the first link resource and the sixth link resource, the device and the terminal can use more resources.

In a possible implementation, that the first device determines a sixth link resource includes: The first device determines whether the sixth link resource is available, and/or the first device determines a sixth link resource that is available. In this embodiment of this application, the device may determine, through the foregoing link resource determining process, the link resource that needs to be used by the device, so that the device can perform communication by using the link resource.

In a possible implementation, that the first device determines whether the sixth link resource is available, and/or the first device determines a sixth link resource that is available includes: The first device determines, based on measurement information, whether the sixth link resource is available, and/or the sixth link resource that is available; or the first device determines, based on indication information sent by a first satellite in the first communication system, a mobility management entity, a resource management center, a terminal served by the first device, or a network device in a second communication system, whether the sixth link resource is available, and/or the sixth link resource that is available. In this embodiment of this application, the device may uniquely determine, by using the foregoing measurement information or indication information, the link resource that needs to be used by the device, so that the device can perform communication by using the link resource.

According to a second aspect, an embodiment of this application further provides a communication method, including: A first device determines a second link resource, where the second link resource is used, by the first device, for receiving information sent by a first terminal; and the first device determines a fifth link resource, where the fifth link resource is used for sending information to a third terminal by the first device, where the second link resource has a same frequency resource as the fifth link resource; and the first device belongs to a first communication system.

In some embodiments of this application, the first device belongs to the first communication system. The first device may determine a second link resource, where the second link resource is used, by the first device, for receiving information sent by the first terminal. In addition, the first device may determine a fifth link resource, where the fifth link resource is used for sending information to the third terminal by the first device, where the second link resource has a same frequency resource as the fifth link resource. In other words, the second link resource and the fifth link resource may share the same frequency resource. For example, the second link resource has a frequency resource completely the same as that of the fifth link resource, or the second link resource has a frequency resource partially the same as that of the fifth link resource. In the resource sharing manner of the second link resource and the fifth link resource, the device and the terminal can use more resources.

In a possible implementation, that the first device determines a fifth link resource includes: The first device determines whether the fifth link resource is available, and/or the first device determines a fifth link resource that is available. In this embodiment of this application, the device may determine, through the foregoing link resource determining process, the link resource that needs to be used by the device, so that the device can perform communication by using the link resource.

In a possible implementation, that the first device determines whether the fifth link resource is available, and/or the first device determines a fifth link resource that is available includes: The first device determines, based on measurement information, whether the fifth link resource is available, and/or the fifth link resource that is available; or the first device determines, based on indication information sent by a first satellite in the first communication system, a mobility management entity, a resource management center, a terminal served by the first device, or a network device in a second communication system, whether the fifth link resource is available, and/or the fifth link resource that is available. In this embodiment of this application, the device may uniquely determine, by using the foregoing measurement information or indication information, the link resource that needs to be used by the device, so that the device can perform communication by using the link resource.

According to a third aspect, an embodiment of this application further provides a communication method, including: A second device determines a third link resource, where the third link resource has a same frequency resource as a second link resource, and the second link resource is used, by a first device, for receiving information sent by a first terminal; and the second device sends information to a second terminal by using the third link resource, where the first device belongs to a first communication system; and the second device belongs to a second communication system.

In some embodiments of this application, the first device belongs to the first communication system, the second device belongs to the second communication system, the second device may determine a third link resource, and the second device may send information to the second terminal by using the third link resource. The third link resource has a same frequency resource as a second link resource. The second link resource is used, by the first device, for receiving information sent by the first terminal. In other words, the third link resource and the second link resource may share the same frequency resource. For example, the third link resource has a frequency resource completely the same as that of the second link resource, or the third link resource has a frequency resource partially the same as that of the second link resource. In the resource sharing manner of the third link resource and the second link resource, the device and the terminal can use more resources.

In a possible implementation, that the third link resource has a same frequency resource as the second link resource includes: The frequency resource is a spectrum resource, a frequency range resource, a band resource, a carrier resource, or a resource block.

In a possible implementation, the third link resource has a frequency resource completely the same as that of the second link resource, or the third link resource has a frequency resource partially the same as that of the second link resource.

In a possible implementation, the method further includes: The second device sends information to a third terminal by using the third link resource, where the third terminal is a terminal that has a capability of communicating with a satellite in the first communication system and a network device in the second communication system.

In a possible implementation, that a second device determines a third link resource includes: The second device determines whether the third link resource is available, and/or the second device determines a third link resource that is available. In this embodiment of this application, the device may determine, through the foregoing link resource determining process, the link resource that needs to be used by the device, so that the device can perform communication by using the link resource.

In a possible implementation, that the second device determines whether the third link resource is available, and/or the second device determines a third link resource that is available includes: The second device determines, based on measurement information, whether the third link resource is available, and/or the third link resource that is available; or the second device determines, based on indication information sent by a mobility management entity, a resource management center, the first device, or a terminal served by the first device, whether the third link resource is available, and/or the third link resource that is available. In this embodiment of this application, the device may uniquely determine, by using the foregoing measurement information or indication information, the link resource that needs to be used by the device, so that the device can perform communication by using the link resource.

According to a fourth aspect, an embodiment of this application further provides a communication method, including: A second device determines a fourth link resource, where the fourth link resource has a same frequency resource as a first link resource, and the first link resource is used for sending information to a first terminal by a first device; and receiving, by the second device by using the fourth link resource, information sent by a second terminal, where the first device belongs to a first communication system; and the second device belongs to a second communication system.

In some embodiments of this application, the first device belongs to the first communication system, and the second device belongs to the second communication system. The second device may determine a fourth link resource, and the second device may use the fourth link resource to receive information sent by the second terminal. The fourth link resource has a same frequency resource as a first link resource. The first link resource is used for sending information to the first terminal by the first device. In other words, the fourth link resource and the first link resource may share the same frequency resource. For example, the fourth link resource has a frequency resource completely the same as that of the first link resource, or the fourth link resource has a frequency resource partially the same as that of the first link resource. In the resource sharing manner of the fourth link resource and the first link resource, the device and the terminal can use more resources.

In a possible implementation, the method further includes: The second device receives, by using the fourth link resource, information sent by a third terminal, where the third terminal is a terminal that has a capability of communicating with a satellite in the first communication system and a network device in the second communication system.

In a possible implementation, that a second device determines a fourth link resource includes: The second device determines whether the fourth link resource is available, and/or the second device determines a fourth link resource that is available. In this embodiment of this application, the device may determine, through the foregoing link resource determining process, the link resource that needs to be used by the device, so that the device can perform communication by using the link resource.

In a possible implementation, that the second device determines whether the fourth link resource is available, and/or the second device determines a fourth link resource that is available includes: The second device determines, based on measurement information, whether the fourth link resource is available, and/or the fourth link resource that is available; or the second device determines, based on indication information sent by a mobility management entity, a resource management center, the first device, or a terminal served by the first device, whether the fourth link resource is available, and/or the fourth link resource that is available. In this embodiment of this application, the device may uniquely determine, by using the foregoing measurement information or indication information, the link resource that needs to be used by the device, so that the device can perform communication by using the link resource.

According to a fifth aspect, an embodiment of this application further provides a communication method, including: A second terminal determines a third link resource, where the third link resource has a same frequency resource as a second link resource, and the second link resource is used, by a first device, for receiving information sent by a first terminal; and the second terminal receives, by using the third link resource, information sent by a second device, where the first device belongs to a first communication system; and the second device belongs to a second communication system.

In a possible implementation, that a second terminal determines a third link resource includes: the second terminal determines whether the third link resource is available, and/or the second terminal determines a third link resource that is available. In this embodiment of this application, the terminal may uniquely determine, through the foregoing link resource determining process, the link resource that needs to be used by the terminal, so that the device can perform communication by using the link resource.

In a possible implementation, that the second terminal determines whether the third link resource is available, and/or the second terminal determines a third link resource that is available includes: The second terminal determines, based on measurement information, whether the third link resource is available, and/or the third link resource that is available; or the second terminal determines, based on indication information sent by a mobility management entity, a resource management center, or the second device, whether the third link resource is available, and/or the third link resource that is available. In this embodiment of this application, the terminal may uniquely determine, by using the foregoing measurement information or indication information, the link resource that needs to be used by the terminal, so that the terminal can perform communication by using the link resource.

According to a sixth aspect, an embodiment of this application further provides a communication method, including: a second terminal determines a fourth link resource, where the fourth link resource has a same frequency resource as a first link resource, and the first link resource is used for sending information to a first terminal by a first device; and the second terminal sends information to a second device by using the fourth link resource, where the first device belongs to a first communication system; and the second device belongs to a second communication system.

In a possible implementation, that a second terminal determines a fourth link resource includes: The second terminal determines whether the fourth link resource is available, and/or the second terminal determines a fourth link resource that is available. In this embodiment of this application, the terminal may uniquely determine, through the foregoing link resource determining process, the link resource that needs to be used by the terminal, so that the device can perform communication by using the link resource.

In a possible implementation, that the second terminal determines whether the fourth link resource is available, and/or the second terminal determines a fourth link resource that is available includes: The second terminal determines, based on measurement information, whether the fourth link resource is available, and/or the fourth link resource that is available; or the second terminal determines, based on indication information sent by a mobility management entity, a resource management center, or the second device, whether the fourth link resource is available, and/or the fourth link resource that is available. In this embodiment of this application, the terminal may uniquely determine, by using the foregoing measurement information or indication information, the link resource that needs to be used by the terminal, so that the terminal can perform communication by using the link resource.

According to a seventh aspect, an embodiment of this application further provides a communication method, including: A third terminal determines a sixth link resource, where the sixth link resource has a same frequency resource as a first link resource, and the first link resource is used for sending information to a first terminal by a first device; and the third terminal sends information to the first device by using the sixth link resource, where the first device belongs to a first communication system.

In a possible implementation, that a third terminal determines a sixth link resource includes: The third terminal determines whether the sixth link resource is available, and/or the third terminal determines a sixth link resource that is available. In this embodiment of this application, the terminal may uniquely determine, through the foregoing link resource determining process, the link resource that needs to be used by the terminal, so that the device can perform communication by using the link resource.

In a possible implementation, that the third terminal determines whether the sixth link resource is available, and/or the third terminal determines a sixth link resource that is available includes: The third terminal determines, based on measurement information, whether the sixth link resource is available, and/or the sixth link resource that is available; or

the third terminal determines, based on indication information sent by a first satellite in the first communication system, a mobility management entity, a resource management center, a terminal served by the first device, or a network device in a second communication system, whether the sixth link resource is available, and/or the sixth link resource that is available. In this embodiment of this application, the terminal may uniquely determine, by using the foregoing measurement information or indication information, the link resource that needs to be used by the terminal, so that the terminal can perform communication by using the link resource.

According to an eighth aspect, an embodiment of this application further provides a communication method, including: A third terminal determines a fifth link resource, where the fifth link resource has a same frequency resource as a second link resource, and the second link resource is used, by a first device, for receiving information sent by a first terminal; and the third terminal receives, by using the fifth link resource, information sent by the first device, where the first device belongs to a first communication system.

In a possible implementation, that a third terminal determines a fifth link resource includes: The third terminal determines whether the fifth link resource is available, and/or the third terminal determines a fifth link resource that is available. In this embodiment of this application, the terminal may uniquely determine, through the foregoing link resource determining process, the link resource that needs to be used by the terminal, so that the device can perform communication by using the link resource.

In a possible implementation, that the third terminal determines whether the fifth link resource is available, and/or the third terminal determines a fifth link resource that is available includes: The third terminal determines, based on measurement information, whether the fifth link resource is available, and/or the fifth link resource that is available; or the third terminal determines, based on indication information sent by a first satellite in the first communication system, a mobility management entity, a resource management center, a terminal served by the third terminal, or a network device in a second communication system, whether the fifth link resource is available, and/or the fifth link resource that is available. In this embodiment of this application, the terminal may uniquely determine, by using the foregoing measurement information or indication information, the link resource that needs to be used by the terminal, so that the terminal can perform communication by using the link resource.

According to a ninth aspect, an embodiment of this application further provides a communication apparatus. The communication apparatus is a first device, and the first device includes: a processing module, configured to determine a first link resource, where the first link resource is used for sending information to a first terminal by the first device, where the processing module is further configured to determine a sixth link resource, where the sixth link resource is used, by the first device, for receiving information sent by a third terminal; the first link resource has a same frequency resource as the sixth link resource; and the first device belongs to a first communication system.

According to a tenth aspect, an embodiment of this application further provides a communication apparatus. The communication apparatus is a first device, and the first device includes: a processing module, configured to determine a second link resource, where the second link resource is used, by the first device, for receiving information sent by a first terminal, where the processing module is further configured to determine a fifth link resource, where the fifth link resource is used for sending information to a third terminal by the first device; the second link resource has a same frequency resource as the fifth link resource; and the first device belongs to a first communication system.

According to an eleventh aspect, an embodiment of this application further provides a communication apparatus. The communication apparatus is a second device, and the second device includes: a processing module, configured to determine a third link resource, where the third link resource has a same frequency resource as a second link resource, and the second link resource is used, by a first device, for receiving information sent by a first terminal; the processing module is configured to send, by using a transceiver module, information to a second terminal by using the third link resource; the first device belongs to a first communication system; and the second device belongs to a second communication system.

According to a twelfth aspect, an embodiment of this application further provides a communication apparatus. The communication apparatus is a second device, and the second device includes: a processing module, configured to determine a fourth link resource, where the fourth link resource has a same frequency resource as a first link resource, and the first link resource is used for sending information to a first terminal by a first device; the processing module is configured to receive, by using a transceiver module and by using the fourth link resource, information sent by a second terminal; the first device belongs to a first communication system; and the second device belongs to a second communication system.

According to a thirteenth aspect, an embodiment of this application further provides a communication apparatus. The communication apparatus is a second terminal, and the second terminal includes: a processing module, configured to determine a third link resource, where the third link resource has a same frequency resource as a second link resource, and the second link resource is used, by a first device, for receiving information sent by a first terminal; the processing module is configured to receive, by using a transceiver module and by using the third link resource, information sent by a second device; the first device belongs to a first communication system; and the second device belongs to a second communication system.

According to a fourteenth aspect, an embodiment of this application further provides a communication apparatus. The communication apparatus is a second terminal, and the second terminal includes: a processing module, configured to determine a fourth link resource, where the fourth link resource has a same frequency resource as a first link resource, and the first link resource is used for sending information to a first terminal by a first device; the processing module is configured to send, by using a transceiver module, information to a second device by using the fourth link resource; the first device belongs to a first communication system; and the second device belongs to a second communication system.

According to a fifteenth aspect, an embodiment of this application further provides a communication apparatus. The communication apparatus is a third terminal, and the third terminal includes: a processing module, configured to determine a sixth link resource, where the sixth link resource has a same frequency resource as a first link resource, and the first link resource is used for sending information to a first terminal by a first device; the processing module is configured to send, by using a transceiver module, information to the first device by using the sixth link resource; and the first device belongs to a first communication system.

According to a sixteenth aspect, an embodiment of this application further provides a communication apparatus. The communication apparatus is a third terminal, and the third terminal includes: a processing module, configured to determine a fifth link resource, where the fifth link resource has a same frequency resource as a second link resource, and the second link resource is used, by a first device, for receiving information sent by a first terminal; the processing module is configured to receive, by using a transceiver module and by using the sixth link resource, information sent by the first device; and the first device belongs to a first communication system.

In the ninth aspect to the sixteenth aspect of this application, the composition modules of the communication apparatus may further perform the steps described in the first aspect to the eighth aspect and the various possible implementations. For details, refer to the descriptions in the first aspect to the eighth aspect and the various possible implementations.

According to a seventeenth aspect, an embodiment of this application provides a computer-readable storage medium. The computer-readable storage medium stores instructions. When the instructions are run on a computer, the computer is enabled to perform the methods according to the first aspect to the eighth aspect.

According to an eighteenth aspect, an embodiment of this application provides a computer program product including instructions. When the instructions are run on a computer, the computer is enabled to perform the methods according to the first aspect to the eighth aspect.

According to a nineteenth aspect, an embodiment of this application provides a communication apparatus. The communication apparatus may include an entity such as a satellite, a satellite ground station, a satellite phone, a network device, a terminal device, or a chip. The communication apparatus includes a processor and a memory. The memory is configured to store instructions. The processor is configured to execute the instructions in the memory, to enable the communication apparatus to perform the method according to any one of the first aspect or the eighth aspect.

According to a twentieth aspect, this application provides a chip system. The chip system includes a processor, configured to support a first device, a second device, a first terminal, a second terminal, and a third terminal in implementing the functions in the foregoing aspects, for example, sending or processing data and/or information involved in the foregoing methods. In a possible design, the chip system further includes a memory, and the memory is configured to store program instructions and data that are necessary for the first device, the second device, the first terminal, the second terminal, and the third terminal. The chip system may include a chip, or may include a chip and another discrete device.

According to a twenty-first aspect, an embodiment of this application further provides a first communication system, including the first device and the first terminal in the ninth aspect or the tenth aspect, and the third terminal in the fifteenth aspect or the sixteenth aspect.

According to a twenty-second aspect, an embodiment of this application further provides a second communication system, including the second device in the eleventh aspect or the twelfth aspect and the second terminal in the thirteenth aspect or the fourteenth aspect.

### BRIEF DESCRIPTION OF DRAWINGS

FIG. 1 is a schematic diagram of a composition structure of a first communication system according to an embodiment of this application;
FIG. 2 is a schematic diagram of a composition structure of a second communication system according to an embodiment of this application;
FIG. 3 is a schematic flowchart of interaction between a first device, a first terminal, and a third terminal according to an embodiment of this application;
FIG. 4 is another schematic flowchart of interaction between a first device, a first terminal, and a third terminal according to an embodiment of this application;
FIG. 5 is a schematic flowchart of interaction between a second device and a second terminal according to an embodiment of this application;
FIG. 6 is a schematic flowchart of interaction between a second device and a second terminal according to an embodiment of this application;
FIG. 7 is a schematic diagram of sharing a frequency resource by a satellite communication system and a cellular communication system according to an embodiment of this application;
FIG. 8 is a schematic diagram of a composition structure of a device according to an embodiment of this application;
FIG. 9 is a schematic diagram of a composition structure of a terminal according to an embodiment of this application;
FIG. 10 is a schematic diagram of a composition structure of another device according to an embodiment of this application; and
FIG. 11 is a schematic diagram of a composition structure of another terminal according to an embodiment of this application.

### DESCRIPTION OF EMBODIMENTS

Embodiments of this application provide a communication method and a communication apparatus, so that a device and a terminal can use more resources.

The following describes embodiments of this application with reference to the accompanying drawings.

The technical solutions provided in embodiments of this application may be applied to various communication systems, for example, a first communication system and a second communication system. The first communication system and the second communication system are two different types of communication systems. For example, the first communication system may be a satellite communication system, and the second communication system may be a cellular communication system. For another example, the first communication system and the second communication system are communication systems of two different network standards. For another example, the first communication system and the second communication system are communication systems applied to different network environments. The cellular communication system provided in embodiments of this application has a plurality of implementations. For example, the cellular communication system may also be referred to as a wireless mobile communication system or a mobile communication system. For example, the cellular communication system may include a long term evolution (long term evolution, LTE) system, a 5G mobile communication system, a wireless fidelity (wireless-fidelity, Wi-Fi) system, a future communication system, or a system integrating a plurality of communication systems. This is not limited in embodiments of this application. 5G may also be referred to as a new radio (new radio, NR). In subsequent embodiments, an example in which the first communication system is a satellite communication system and the second communication system is a cellular communication system is used for description. However, embodiments of this application are not limited thereto, and may be applied to other different types of communication systems.

A communication system may include nodes that communicate with each other. For example, the communication system may include two devices, where one device communicates with the other device, and the other device is a peer device for communication with the device. For example, the other device may be referred to as a terminal.

A device in embodiments of this application is an entity that can send a signal and/or receive a signal in a communication system. The device may be a network device, or may be user equipment. For example, the device may be a base station, a satellite, or a ground station. For example, a network device provided in this embodiment of this application may include a base station (base station, BS), and may be a device that is deployed in a radio access network and that can perform wireless communication with a terminal device. The base station may have a plurality of forms, for example, an access point such as a macro base station, a micro base station, a relay station, a satellite, an uncrewed aerial vehicle, or an airplane. For example, the base station in embodiments of this application may be a base station in a 5G mobile communication system and an evolved system of the 5G mobile communication system, or a base station in LTE. The base station in the 5G mobile communication system may also be referred to as a transmission reception point (transmission reception point, TRP) or a gNB. In embodiments of this application, an apparatus configured to implement a function of the network device may be a network device, or may be an apparatus, for example, a chip system, that can support the network device in implementing the function. The apparatus may be deployed on the network device, or may be used with the network device. In embodiments of this application, an example in which the apparatus configured to implement the function of the network device is the network device is used to specifically describe the technical solutions provided in embodiments of this application.

The terminal in embodiments of this application is an entity that can send and/or receive a signal. The terminal is a peer device that communicates with a device in a communication system. The terminal may be considered as another device. The term "terminal" is introduced into embodiments of this application to describe embodiments of the solution more conveniently. For example, the terminal may be a mobile communication handheld terminal, an IoT terminal, a terminal that can receive a satellite signal, a ground station, or a satellite. For a mobile communication system, the terminal may be a mobile communication handheld terminal or an IoT terminal. For a satellite communication system, the terminal may be a terminal (for example, a satellite phone or a satellite television) that can receive a satellite signal, a ground station, or a satellite.

It should be noted that, for a same entity, the entity may serve as a device to communicate with a peer end (for example, another device or terminal) by using a link resource, or may serve as a terminal to communicate with a peer end (for example, another device or terminal) by using a same link resource. Such an entity can send information to a terminal by using a first link resource, and can also receive information from another terminal by using the first link resource. This requires the entity to have a capability of performing both sending and receiving on a same link resource. Therefore, the entity needs to perform effective isolation on a sending apparatus and a receiving apparatus, to ensure that interference between a signal sent by the entity and a signal received by the entity is suppressed and reduced when a same link resource is used. For example, the entity may be a satellite.

For example, the satellite may be used as a device to communicate with a satellite terminal (for example, a satellite phone) on the ground. For example, the satellite sends a signal to the satellite terminal, and may receive a signal sent by the satellite terminal. For another example, the satellite may be used as a terminal to communicate with the ground station. The satellite sends a signal to the ground station, and may receive a signal sent by the ground station.

The terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on the surface of water (for example, in a steamship); or may be deployed in the air (for example, on an airplane, a balloon, or a satellite). The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be a terminal device, or may be an apparatus, for example, a chip system, that can support a terminal device in implementing the function. The apparatus may be deployed on the terminal device, or may be used with the terminal device. In embodiments of this application, the chip system may include a chip, or may include a chip and another discrete device. In embodiments of this application, an example in which the apparatus configured to implement the function of the terminal device is a terminal device is used to specifically describe the technical solutions provided in embodiments of this application.

A terminal device in an mMTC scenario may be a reduced capability terminal device. The reduced capability terminal device may also be referred to as a light (light) terminal device. For example, a (reduced capability, REDCAP) terminal device in an NR system has a weaker capability than the conventional terminal device. Compared with the conventional terminal device, for example, the REDCAP terminal device has one or more of the following features: supporting a narrower bandwidth, having fewer configured antennas, supporting lower maximum transmit power, supporting a weaker duplex capability (where for example, the conventional terminal device supports full-duplex frequency division duplex, but the REDCAP terminal device supports half-duplex frequency division duplex), and a weaker data processing capability (where for example, the REDCAP terminal device can process less data than the conventional terminal device within a same time period, or the REDCAP terminal device has a longer processing time than the conventional terminal device when processing same data). Therefore, the REDCAP terminal device and the conventional terminal device may require different system information, dedicated access networks, control channels with different performance, and/or the like. The conventional terminal device may be a non-REDCAP terminal device, and the non-REDCAP terminal device mainly supports an enhanced mobile broadband (enhanced mobile broadband, eMBB) service and/or an ultra-reliable and low latency communications (ultra-reliable and low latency communications, URLLC) service. Compared with the REDCAP terminal device, the conventional terminal device may be considered as a high-capability terminal device or a terminal device whose capability is not limited. Optionally, the conventional terminal device may be replaced with a terminal device that is introduced into the future and that has a higher capability than the REDCAP terminal device.

The technical solutions provided in embodiments of this application may be applied to wireless communication between communication devices. The wireless communication between communication devices may include wireless communication between the network device and the terminal device, wireless communication between network devices, and wireless communication between terminal devices. In embodiments of this application, the term "wireless communication" may be referred to as "communication" for short, and the term "communication" may also be described as "data transmission", "information transmission", or "transmission". The technical solution may be used for wireless communication between a scheduling entity and a subordinate entity. The scheduling entity may allocate a resource to the subordinate entity. In embodiments of this application, transmission may be sending or receiving. If the transmission is sending, a peer device that communicates with a device that sends information receives the information. If the transmission is receiving, a peer device that communicates with a device that receives information sends the information.

A person skilled in the art may use the technical solutions provided in embodiments of this application to perform wireless communication between another scheduling entity and a subordinate entity, for example, wireless communication between a macro base station and a micro base station, and wireless communication between a first-type terminal device and a second-type terminal device. The first-type terminal device and the second-type terminal device may indicate two different types of terminal devices. For example, the first-type terminal device may be a terminal device configured for an industrial wireless sensor network (industry wireless sensor network, IWSN), and the second-type terminal device may be a terminal device configured for video surveillance (Video Surveillance). Alternatively, the first-type terminal device may be a capability reduced terminal device of a type 1, and the second-type terminal device may be a capability reduced terminal device of a type 2 and a non-capability-reduced terminal device. For example, the first-type terminal device may be a terminal device for an industrial wireless sensor network, and the second-type terminal device may be a terminal device for video surveillance and an enhanced mobile broadband (eMBB) terminal device.

For example, in embodiments of this application, all frequency resources of each of one or more uplink carriers can only be used for uplink transmission. For another example, in embodiments of this application, some resources in at least one uplink carrier may be used for downlink receiving. For another example, in embodiments of this application, all frequency resources in some uplink carriers can only be used for uplink transmission, and some resources in some uplink carriers may be used for downlink receiving.

In embodiments of this application, "/" may represent an "or" relationship between associated objects. For example, A/B may represent A or B. However, in calculation according to a formula, "/" may represent a division symbol. For example, N/M represents N divided by M, and N and M each represent a value. The term "and/or" may be used to indicate that three relationships exist between associated objects. For example, A and/or B may represent the following three cases: Only A exists, both A and B exist, and only B exists, where A and B may be singular or plural. In addition, "at least one of" may represent any combination of the foregoing items. For example, "at least one of A, B, and C" or "at least one of A, B, or C" may represent the following combinations: at least one A; at least one B; at least one C; at least one A and at least one B; at least one B and at least one C; at least one A, at least one B, and at least one C. To facilitate description of the technical solutions in embodiments of this application, in embodiments of this application, terms such as "first", "second", "A", and "B" may be used to distinguish between technical features with a same or similar function. The terms such as "first", "second", "A", and "B" do not limit a quantity and an execution sequence, and the terms such as "first", "second", "A", and "B" do not indicate a definite difference either. In embodiments of this application, the term such as "example" or "for example" is used to represent an example, an illustration, or a description, and is described as "example" or "for example". Any embodiment or design scheme should not be explained as being more preferred or having more advantages than another embodiment or design scheme. Use of the terms such as "example" or "for example" is intended to present a related concept in a specific manner for ease of understanding.

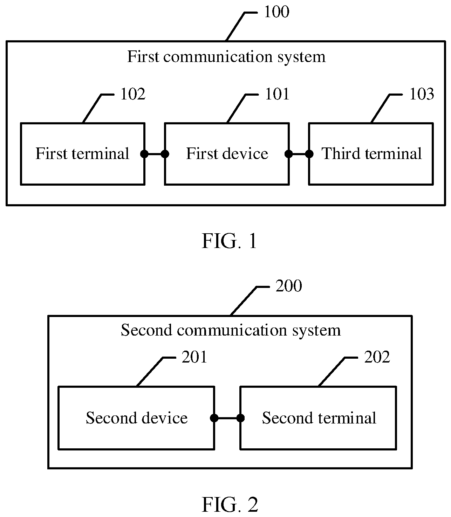

As shown in FIG. 1, an embodiment of this application provides a first communication system 100. The first communication system 100 includes a first device 101, a first terminal 102, and a third terminal 103. The first device 101 may communicate with the first terminal 102. For example, the first device 101 sends information, and the first terminal 102 receives the information, or the first device 101 receives information sent by the first terminal 102. The first device 101 may communicate with the third terminal 103. For example, the first device 101 sends information, and the third terminal 103 receives the information, or the first device 101 receives information sent by the third terminal 103. The first terminal 102 and the third terminal 103 may be terminals of different types. For example, the first communication system is a satellite communication system, the first device 101 may be a satellite (that is, a satellite launched into the sky), the first terminal 102 may be a satellite ground station (ground station for short), and the third terminal 103 may be a satellite phone. The satellite may communicate with the satellite ground station, and the satellite may also communicate with the satellite phone.

As shown in FIG. 2, an embodiment of this application provides a second communication system 200. The second communication system 200 includes a second device 201 and a second terminal 202. The second device 201 may communicate with the second terminal 202. For example, the second device 201 sends information, and the second terminal 202 receives the information, or the second device 201 receives information sent by the second terminal 202. For example, the second communication system is a cellular communication system, the second device 201 may be a base station, and the second terminal 202 may be a terminal device. The base station may communicate with the terminal device.

In embodiments of this application, implementation methods in the present invention are mainly described by using an example in which the first communication system is a satellite communication system and the second communication system is a cellular communication system. However, the implementation methods in embodiments of this application may be similarly applied to resource use between other different communication systems. Details are not described herein.

The following embodiments of this application are respectively described from perspectives of different entities and different signal sending or receiving processes. It should be noted that the embodiment methods in embodiments of this application may be combined with each other to form a new embodiment or implementation method. This falls within the protection scope of embodiments of this application.

The technical solutions provided in embodiments of this application may be applied to various communication scenarios, for example, one or more of the following communication scenarios: communication between a satellite and a satellite ground station, communication between a satellite and a satellite phone, enhanced mobile broadband (enhanced mobile broadband, eMBB), ultra-reliable and low latency communications (ultra-reliable and low latency communications, URLLC), massive machine type communications (massive machine type communications, mMTC), device-to-device (device-to-device, D2D) communication, vehicle to everything (vehicle to everything, V2X) communication, vehicle to vehicle (vehicle to vehicle, V2V) communication, the Internet of things (internet of things, IoT), and the like.

A cellular communication system includes communication devices, and wireless communication may be performed between the communication devices by using an air interface resource. The communication devices may include a network device and a terminal device, and the network device may also be referred to as a network-side device. The air interface resource may include at least one of a time domain resource, a frequency domain resource, a code resource, and a spatial resource. In embodiments of this application, "at least one" may also be described as "one or more", and "a plurality of may be "two, three, four, or more". This is not limited in embodiments of this application. For example, a wireless communication system includes two communication devices: a second device and a second terminal. The second device may be a network device, and the second terminal may be a terminal device. Alternatively, the second device may be a terminal device, and the terminal may be another terminal device.

Step descriptions and examples in embodiments of this application do not mean that each step is mandatory during method implementation in embodiments of this application, and do not limit or restrict a sequence of steps during method implementation in embodiments of this application.

The following describes a communication method provided in embodiments of this application by using an example. Some involved entities and resources are described as follows:
A first device is a satellite in a satellite communication system.

A first terminal is a ground receiving station in the satellite communication system.

A third terminal is a satellite phone or a satellite television in the satellite communication system.

A second device is a base station in a cellular communication system.

A second terminal is a terminal device in the cellular communication system.

A first link resource is a frequency resource used for sending information to the first terminal by the first device.

A second link resource is a frequency resource used, by the first device, for receiving information from the first terminal.

A third link resource is a frequency resource used for sending information to the second terminal by the second device.

A fourth link resource is a frequency resource used for receiving the information from the second terminal by the second device.

A fifth link resource is a frequency resource used for sending information to the third terminal by the first device. When the first device uses the first link resource and the fifth link resource, objects that receive information are different.

A sixth link resource is a frequency resource used, by the first device, for receiving information from the third terminal. When the first device uses the second link resource and the sixth link resource, subjects that send information to the first device are different.

For example, a first communication system includes the first device and the first terminal, or a first communication system includes the first device and the third terminal, or a first communication system includes the first device, the first terminal, and the third terminal. For example, the first communication system is the satellite communication system. For example, the first device is a satellite. For example, when the first communication system includes the first device and the first terminal, the first terminal is the satellite phone and/or a ground station. For example, when the first communication system includes the first device, the first terminal, and the third terminal, the first terminal is a ground station, and the third terminal is a satellite phone.

A second communication system includes the second device and the second terminal. For example, the second communication system is a mobile communication system. For example, the second device is a base station. The second terminal is user equipment.

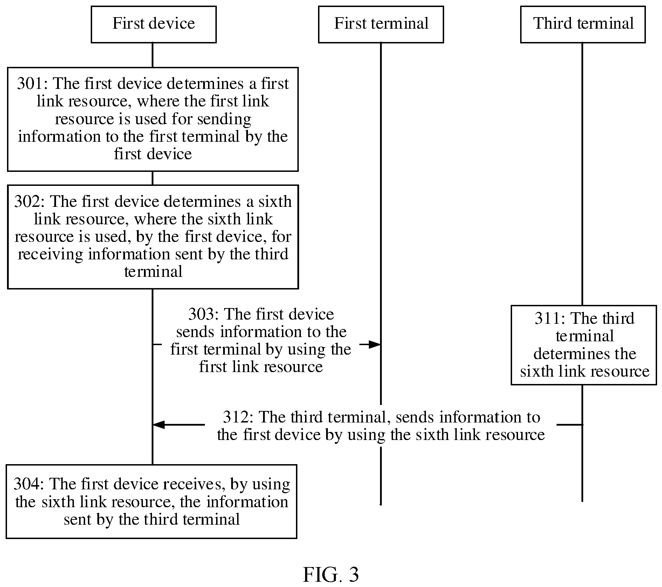

FIG. 3 is a schematic flowchart of interaction between a first device, a first terminal, and a third terminal according to an embodiment of this application. In an interaction procedure, step 301 to step 304 are described from a side of the first device, and step 311 and step 312 are described from a side of the third terminal. The interaction procedure shown in FIG. 3 mainly includes the following steps.

301: The first device determines a first link resource, where the first link resource is used for sending information to the first terminal by the first device.

In this embodiment of this application, the first device sends the information to the first terminal by using the first link resource. For example, the first device determines the first link resource. The first link resource may be a first spectrum, or information (for example, a band number) related to a first band (band), or a frequency resource (for example, a carrier or a carrier bandwidth) corresponding to the first spectrum (or the first band), or a part (for example, a resource block) of the frequency resource corresponding to the first spectrum (or the first band).

The following describes a specific implementation of determining a link resource in this embodiment of this application. For example, the link resource may be determined by an apparatus. The apparatus may be the foregoing device or the foregoing terminal. For example, the link resource may be determined by a device. For example, the link resource may be determined by an X^{th} device, where X may be 1 or 2. For another example, the link resource may be determined by a terminal. For example, the link resource may be determined by a Y^{th} terminal, where Y may be 1, 2, or 3. There may be a plurality of types of determined link resources. For example, a Z^{th} link resource may be determined, where Z may be 1, 2, 3, 4, 5, or 6. For example, the first link resource, a second link resource, a third link resource, a fourth link resource, a fifth link resource, and a sixth link resource may be determined.

The following uses a process in which the X^{th} device determines the Z^{th} link resource as an example. A process in which the Y^{th} terminal determines the Z^{th} link resource is similar, and details are not described.

In some embodiments of this application, that the X^{th} device determines the Z^{th} link resource includes:
The X^{th} device determines whether the Z^{th} link resource is available, and/or the X^{th} device determines a Z^{th} link resource that is available.

The X^{th} device determines whether the Z^{th} link resource is available, or the X^{th} device determines the Z^{th} link resource that is available, or the X^{th} device determines whether the Z^{th} link resource is available and X^{th} device determines the Z^{th} link resource that is available. An example is described below. The X^{th} device determines whether the Z^{th} link resource is available, that is, needs to determine whether the X^{th} device has a capability or a qualification to use the Z^{th} link resource. For example, whether the X^{th} device can use the Z^{th} link resource is determined based on a correspondence between device identifiers and resources that are authorized to use. When it is determined that the X^{th} device can use the Z^{th} link resource, it may be further determined that the X^{th} device determines the Z^{th} link resource that is available, that is, the X^{th} device needs to determine an identifier of the used link resource. In this embodiment of this application, the device may uniquely determine, through the foregoing link resource determining process, the link resource that needs to be used by the device, so that the device can perform communication by using the link resource.

Further, in some embodiments of this application, that the X^{th} device determines whether the Z^{th} link resource is available, and/or the X^{th} device determines a Z^{th} link resource that is available includes:
The X^{th} device determines, based on measurement information, whether the Z^{th} link resource is available, and/or the Z^{th} link resource that is available; or
the X^{th} device determines, based on indication information sent by a first satellite in a first communication system, a mobility management entity, a resource management center, a terminal served by the X^{th} device, or a network device in a second communication system, whether the Z^{th} link resource is available, and/or the Z^{th} link resource that is available.

For example, the X^{th} device determines the Z^{th} link resource based on measurement of the X^{th} device, or the X^{th} device determines the Z^{th} link resource based on measurement reporting of the terminal device served by the X^{th} device. For example, determining the Z^{th} link resource may be understood as: determining, by the X^{th} device, whether the Z^{th} link resource is available. For another example, determining the Z^{th} link resource may be understood as: determining, from the Z^{th} link resource by the X^{th} device, a resource that can be used for sending information to the X^{th} device. For another example, determining the Z^{th} link resource may be understood as: determining, from the z^{th} link resource by the X^{th} device, one or more carriers and/or a bandwidth of the carrier. For example, the X^{th} device determines the Z^{th} link resource based on an indication of another device. For example, the another device may be a mobility management entity, a resource management center, a terrestrial satellite communication device, a first satellite, or a terminal device. The mobility management entity is an entity that has a management function in the first communication system. The resource management center may be a service center that has a management function in the first communication system. The resource management center may allocate a link resource to the X^{th} device, for example, allocate the Z^{th} link resource to the X^{th} device. The Z^{th} link resource is used for sending information to the first terminal by the X^{th} device. The first satellite may be a satellite other than the first device in a satellite communication system. In this embodiment of this application, the device may uniquely determine, by using the foregoing measurement information or indication information, the link resource that needs to be used by the device, so that the device can perform communication by using the link resource.

The information sent by the first device may be control signaling, a service, information, a message, or the like.

Link resources in embodiments of this application may include a frequency resource, a band resource, a spectrum resource, and the like.

302: The first device determines a sixth link resource, where the sixth link resource is used, by the first device, for receiving information sent by the third terminal.

In this embodiment of this application, the first device receives, by using the sixth link resource, the information sent by the third terminal. For example, the first device determines the sixth link resource. The sixth link resource may be a sixth spectrum, or information (for example, a band number) related to a sixth band, or a frequency resource (for example, a carrier or a carrier bandwidth) corresponding to the sixth spectrum (or band), or a part (for example, a resource block) of the frequency resource corresponding to the second spectrum (or band).

In this embodiment of this application, the first link resource has a same frequency resource as the sixth link resource.

For example, having the same frequency resource means having at least one or more same resource units. For example, the first link resource includes a resource unit A and a resource unit B. The sixth link resource includes the resource unit B and a resource unit C. In this case, it may be considered that the first link resource has the same frequency resource as the sixth link resource. Specifically, the first link resource and the sixth link resource may share the same frequency resource. For example, the first link resource has a frequency resource completely the same as that of the sixth link resource, or the first link resource has a frequency resource partially the same as that of the sixth link resource. In the resource sharing manner of the first link resource and the sixth link resource, the device and/or the terminal can use more resources. In addition, the first link resource is a link resource used for sending information to the first terminal by the first device. In addition, the sixth link resource is a link resource used for receiving from the third terminal by the first device. The first link resource has the same frequency resource as the sixth link resource. In this way, the first device performs both sending and receiving by using the same frequency resource. This improves communication efficiency.

In this embodiment of this application, having the same frequency resource may be having a same spectrum resource. For example, both the first link resource and the sixth link resource belong to spectrum resources with a bandwidth of 100 megahertz (MHz). The first link resource may be a resource with a bandwidth of the first 50 MHz in 100 MHz, and the sixth link resource may be a resource with a bandwidth of the last 50 MHz in 100 MHz. In this case, it is considered that both the first link resource and the sixth link resource are the same spectrum resource with the bandwidth of 100 megahertz.

In some embodiments of this application, that the first device determines a sixth link resource includes:
The first device determines whether the sixth link resource is available, and/or the first device determines a sixth link resource that is available.

In this embodiment of this application, the device may determine, through the foregoing link resource determining process, the link resource that needs to be used by the device, so that the device can perform communication by using the link resource.

Further, in some embodiments of this application, that the first device determines whether the sixth link resource is available, and/or first device determines a sixth link resource that is available includes:
The first device determines, based on measurement information, whether the sixth link resource is available, and/or the sixth link resource that is available; or
the first device determines, based on indication information sent by a first satellite in a first communication system, a mobility management entity, a resource management center, a terminal served by the first device, or a network device in a second communication system, whether the sixth link resource is available, and/or the sixth link resource that is available.

In this embodiment of this application, the device may uniquely determine, by using the foregoing measurement information or indication information, the link resource that needs to be used by the device, so that the device can perform communication by using the link resource.

For example, the first device determines the sixth link resource based on measurement of the first device, or the first device determines the sixth link resource based on measurement reporting of the terminal device served by the first device. For example, determining the sixth link resource may be understood as: The first device determines whether the first terminal can use the sixth link resource. For another example, determining the sixth link resource may be understood as: determining, from the sixth link resource by the first device, a resource that can be used by the first terminal to send information. For another example, determining the sixth link resource may be understood as: determining, from the sixth link resource by the first device, one or more carriers and/or a bandwidth of the carrier.

For example, the first device determines the sixth link resource based on an indication of another device. For example, the another device may be a mobility management entity, a resource management center, a terrestrial satellite communication device, a satellite device, or a terminal device.

Optionally, in some embodiments of this application, the first device may further perform the following steps 303 and 304.

303: The first device sends information to the first terminal by using the first link resource.

For descriptions of the first device, the first link resource, and the information, refer to the foregoing content. Details are not described herein.

The first terminal may belong to the first communication system. For example, the first terminal may belong to the satellite communication system. For descriptions of the first terminal, refer to the foregoing content.

311: The third terminal determines a sixth link resource.

In some embodiments of this application, that the third terminal determines a sixth link resource includes:
The third terminal determines whether the sixth link resource is available, and/or the third terminal determines a sixth link resource that is available.

In this embodiment of this application, the terminal may uniquely determine, through the foregoing link resource determining process, the link resource that needs to be used by the terminal, so that the device can perform communication by using the link resource.

Further, in some embodiments of this application, that the third terminal determines whether the sixth link resource is available, and/or the third terminal determines a sixth link resource that is available includes:
The third terminal determines, based on measurement information, whether the sixth link resource is available, and/or the sixth link resource that is available; or
the third terminal determines, based on indication information sent by a first satellite in a first communication system, a mobility management entity, a resource management center, a terminal served by the first device, or a network device in a second communication system, whether the sixth link resource is available, and/or the sixth link resource that is available.

In this embodiment of this application, the terminal may uniquely determine, by using the foregoing measurement information or indication information, the link resource that needs to be used by the terminal, so that the terminal can perform communication by using the link resource.

312: The third terminal, sends information to the first device by using the sixth link resource.

In this embodiment of this application, the third terminal sends the information to the first device by using the sixth link resource. For example, the third terminal determines the sixth link resource. The sixth link resource may be a sixth spectrum, or information (for example, a band number) related to a sixth band, or a frequency resource (for example, a carrier or a carrier bandwidth) corresponding to the sixth spectrum (or band), or a part (for example, a resource block) of the frequency resource corresponding to the second spectrum (or band).

304: The first device receives, by using the sixth link resource, the information sent by the third terminal.

In this embodiment of this application, the first device determines the sixth link resource in step 302, and the first device receives, by using the sixth link resource, the information sent by the third terminal, so that communication between the first device and the third terminal can be implemented.

It can be learned from the example in the foregoing embodiment that the first device belongs to the first communication system. The first device may determine a first link resource, where the first link resource is used for sending information to the first terminal by the first device. In addition, the first device may determine a sixth link resource, where the sixth link resource is used, by the first device, for receiving information sent by the third terminal. The first link resource has a same frequency resource as the sixth link resource, that is, the first link resource and the sixth link resource may share the same frequency resource. For example, the first link resource has a frequency resource completely the same as that of the sixth link resource, or the first link resource has a frequency resource partially the same as that of the sixth link resource. In the resource sharing manner of the first link resource and the sixth link resource, the device and the terminal can use more resources.

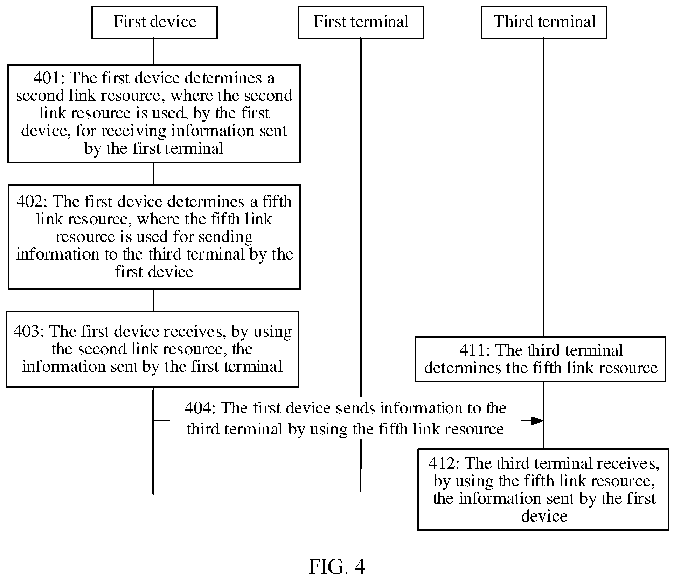

FIG. 4 is a schematic flowchart of interaction between a first device, a first terminal, and a third terminal according to an embodiment of this application. In an interaction procedure, step 401 to step 404 are described from a side of the first device, and step 411 and step 412 are described from a side of the third terminal. The interaction procedure shown in FIG. 4 mainly includes the following steps.
401: The first device determines a second link resource, where the second link resource is used, by the first device, for receiving information sent by the first terminal.

In this embodiment of this application, the first device receives, by using the second link resource, the information sent by the first terminal. For example, the first device determines the second link resource. The second link resource may be a second spectrum, or information (for example, a band number) related to a second band, or a frequency resource (for example, a carrier or a carrier bandwidth) corresponding to the second spectrum (or band), or a part (for example, a resource block) of the frequency resource corresponding to the second spectrum (or band).

For example, the first device determines the second link resource based on measurement of the first device, or the first device determines the second link resource based on measurement reporting of a terminal device served by the first device. For example, determining the second link resource may be understood as: The first device determines whether the first terminal can use the second link resource. For another example, determining the second link resource may be understood as: determining, from the second link resource by the first device, a resource that can be used by the first terminal to send information. For another example, determining the second link resource may be understood as: determining, from the second link resource by the first device, one or more carriers and/or a bandwidth of the carrier.

For example, the first device determines the second link resource based on an indication of another device. For example, the another device may be a mobility management entity, a resource management center, a terrestrial satellite communication device, a satellite device, or a terminal device.

402: The first device determines a fifth link resource, where the fifth link resource is used for sending information to the third terminal by the first device.

In this embodiment of this application, the first device sends the information to the third terminal by using the fifth link resource. For example, the first device determines the fifth link resource. The fifth link resource may be a fifth spectrum, or information (for example, a band number) related to a fifth band (band), or a frequency resource (for example, a carrier or a carrier bandwidth) corresponding to the fifth spectrum (or the fifth band), or a part (for example, a resource block) of the frequency resource corresponding to the fifth spectrum (or the fifth band).

In this embodiment of this application, the second link resource has a same frequency resource as the fifth link resource.

Having the same frequency resource means having at least one or more same resource units. For example, the second link resource includes a resource unit A and a resource unit B. The fifth link resource includes the resource unit B and a resource unit C. In this case, it may be considered that the second link resource has the same frequency resource as the fifth link resource. Specifically, the second link resource and the fifth link resource may share the same frequency resource. For example, the second link resource has a frequency resource completely the same as that of the fifth link resource, or the second link resource has a frequency resource partially the same as that of the fifth link resource. In the resource sharing manner of the second link resource and the fifth link resource, the device and the terminal can use more resources. In addition, the second link resource is a link resource used for receiving, by the first device, information sent by the first terminal, and the fifth link resource is a link resource used for sending information to the third terminal by the first device. The second link resource has the same frequency resource as the fifth link resource. In this way, the first device performs both sending and receiving by using the same frequency resource. This improves communication efficiency.

In some embodiments of this application, that the first device determines a fifth link resource includes:
The first device determines whether the fifth link resource is available, and/or the first device determines a fifth link resource that is available.

In this embodiment of this application, the device may uniquely determine, through the foregoing link resource determining process, the link resource that needs to be used by the device, so that the device can perform communication by using the link resource.

Further, in some embodiments of this application, that the first device determines whether the fifth link resource is available, and/or the first device determines a fifth link resource that is available includes:
The first device determines, based on measurement information, whether the fifth link resource is available, and/or the fifth link resource that is available; or
the first device determines, based on indication information sent by a first satellite in a first communication system, a mobility management entity, a resource management center, a terminal served by the first device, or a network device in a second communication system, whether the fifth link resource is available, and/or the fifth link resource that is available.

In this embodiment of this application, the device may determine, by using the foregoing measurement information or indication information, the link resource that needs to be used by the device, so that the device can perform communication by using the link resource.

For example, the first device determines the fifth link resource based on measurement of the first device, or the first device determines the fifth link resource based on measurement reporting of the terminal device served by the first device. For example, determining the fifth link resource may be understood as: determining, by the first device, whether the fifth link resource is available. For another example, determining the fifth link resource may be understood as: determining, from the fifth link resource by the first device, a resource that can be used for sending information to the third device. For another example, determining the fifth link resource may be understood as: determining, from the fifth link resource by the first device, one or more carriers and/or a bandwidth of the carrier.

For example, the first device determines the fifth link resource based on an indication of another device. For example, the another device may be a mobility management entity, a resource management center, a terrestrial satellite communication device, a satellite, or a terminal device.

Optionally, in some embodiments of this application, the first device may further perform the following steps 403 and 404.

403: The first device receives, by using the second link resource, the information sent by the first terminal.

The fifth link resource has a same frequency resource as the second link resource, and the second link resource is used, by the first device, for receiving the information sent by the first terminal.

411: The third terminal determines a fifth link resource.

In some embodiments of this application, that the third terminal determines a fifth link resource includes:
The third terminal determines whether the fifth link resource is available, and/or the third terminal determines a fifth link resource that is available.

In this embodiment of this application, the terminal may uniquely determine, through the foregoing link resource determining process, the link resource that needs to be used by the terminal, so that the device can perform communication by using the link resource.

Further, in some embodiments of this application, that the third terminal determines whether the fifth link resource is available, and/or the third terminal determines a fifth link resource that is available includes:
The third terminal determines, based on measurement information, whether the fifth link resource is available, and/or the fifth link resource that is available; or
the third terminal determines, based on indication information sent by a first satellite in a first communication system, a mobility management entity, a resource management center, a terminal served by the third terminal, or a network device in a second communication system, whether the fifth link resource is available, and/or the fifth link resource that is available.

In this embodiment of this application, the terminal may uniquely determine, by using the foregoing measurement information or indication information, the link resource that needs to be used by the terminal, so that the terminal can perform communication by using the link resource.

404: The first device sends information to the third terminal by using the fifth link resource.

412: The third terminal receives, by using the fifth link resource, the information sent by the first device.

The first device belongs to the first communication system.

It can be learned from the example in the foregoing embodiment that the first device belongs to the first communication system. The first device may determine a second link resource, where the second link resource is used, by the first device, for receiving information sent by the first terminal. In addition, the first device may determine a fifth link resource, where the fifth link resource is used for sending information to the third terminal by the first device. The second link resource has a same frequency resource as the fifth link resource, that is, the second link resource and the fifth link resource may share the same frequency resource. For example, the second link resource has a frequency resource completely the same as that of the fifth link resource, or the second link resource has a frequency resource partially the same as that of the fifth link resource. In the resource sharing manner of the second link resource and the fifth link resource, the device and the terminal can use more resources.

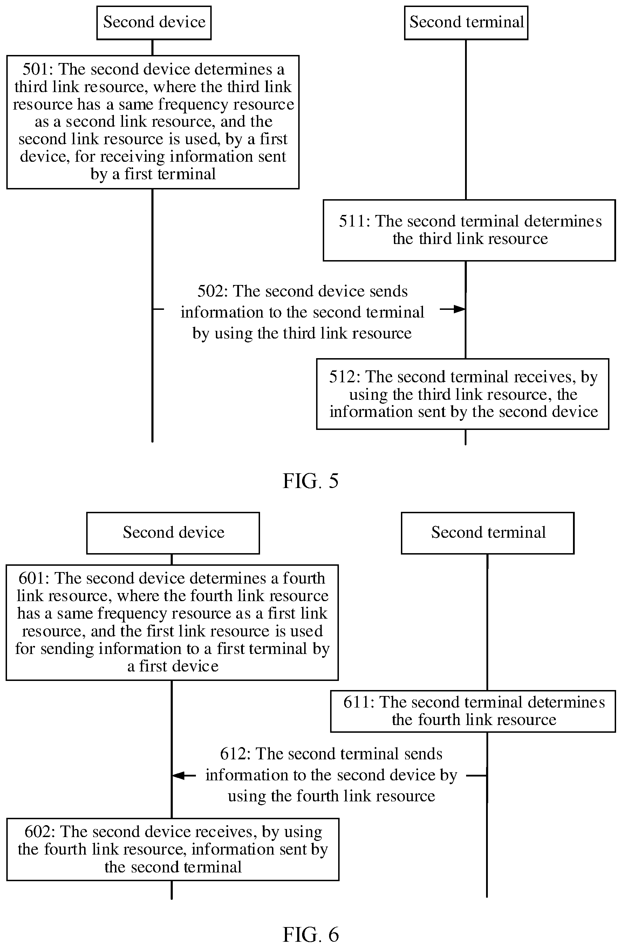

FIG. 5 is a schematic flowchart of interaction between a second device and a second terminal according to an embodiment of this application. In an interaction procedure, step 501 and step 502 are described from a side of the second device, and step 511 and step 512 are described from a side of the second terminal. The interaction procedure shown in FIG. 5 mainly includes the following steps.

501: The second device determines a third link resource.

The third link resource has a same frequency resource as a second link resource, and the second link resource is used, by a first device, for receiving information sent by a first terminal.

The first device belongs to a first communication system.

The second device belongs to a second communication system.

In this embodiment of this application, the second device sends information to the second terminal by using the third link resource. For example, the second device determines the third link resource. The third link resource may be a third spectrum, or information (for example, a band number) related to a third band, or a frequency resource (for example, a carrier or a carrier bandwidth) corresponding to the third spectrum (or the third band), or a part (for example, a resource block) of the frequency resource corresponding to the third spectrum (or the third band).

In this embodiment of this application, the third link resource has a same frequency resource as the second link resource.

Having the same frequency resource means having at least one or more same resource units. For example, the second link resource includes a resource unit A and a resource unit B, and the third link resource includes the resource unit B and a resource unit C. In this case, it may be considered that the third link resource has the same frequency resource as the second link resource. Specifically, the third link resource and the second link resource may share the same frequency resource. For example, the third link resource has a frequency resource completely the same as that of the second link resource, or the third link resource has a frequency resource partially the same as that of the second link resource. In the resource sharing manner of the third link resource and the second link resource, the device and the terminal can use more resources. In addition, the third link resource is a link resource used for receiving, by the second device, information sent by the second terminal, and the second link resource is a link resource used for receiving information by the first device. The third link resource has the same frequency resource as the second link resource. In this way, the second device sends the information and the first device receives the information by using the same frequency resource. This improves communication efficiency. In addition, sending the information by the second device and receiving the information by the first device are two communication processes in completely opposite directions. Considering that terminals of a satellite communication system are sparse, geographical isolation can naturally reduce interference. In addition, when the first device receives, by using the second link resource, the information sent by the first terminal, the second device may send the information to the second terminal by using the third link resource. In addition, the second device may suppress radiant power of the second device to the air through beamforming, side lobe suppression, or the like. Such interference suppression technologies can further effectively reduce interference received when the second device communicates with the second terminal, and can further reduce interference received when the first device communicates with the first terminal.

In some embodiments of this application, that the second device determines a third link resource includes:
The second device determines whether the third link resource is available, and/or the second device determines a third link resource that is available.

In this embodiment of this application, the device may uniquely determine, through the foregoing link resource determining process, the link resource that needs to be used by the device, so that the device can perform communication by using the link resource.

Further, in some embodiments of this application, that the second device determines whether the third link resource is available, and/or the second device determines a third link resource that is available includes:
The second device determines, based on measurement information, whether the third link resource is available, and/or the third link resource that is available; or
the second device determines, based on indication information sent by a mobility management entity, a resource management center, the first device, or a terminal served by the first device, whether the third link resource is available, and/or the third link resource that is available.

In this embodiment of this application, the device may uniquely determine, by using the foregoing measurement information or indication information, the link resource that needs to be used by the device, so that the device can perform communication by using the link resource.

For example, the second device determines the third link resource based on measurement of the second device, or the second device determines the third link resource based on measurement reporting of a terminal device served by the second device. For example, determining the third link resource may be understood as: determining, by the second device, whether the third link resource is available. For another example, determining the third link resource may be understood as: determining, from the third link resource by the second device, a resource that can be used by the second device to send information. For another example, determining the third link resource may be understood as: determining, from the third link resource by the second device, one or more carriers and/or a bandwidth of the carrier.

For example, the second device determines the third link resource based on an indication of another device. For example, the another network device may be a mobility management entity, a resource management center, a terrestrial satellite communication device, a satellite device, another base station, or a terminal device.

502: The second device sends information to the second terminal by using the third link resource.

In some embodiments of this application, in addition to 501 and 502 performed by the second device, the communication method provided in this embodiment of this application further includes:
The second device sends information to a third terminal by using the third link resource, where the third terminal is a terminal that has a capability of communicating with a satellite in the first communication system and a network device in the second communication system.

In some embodiments of this application, the third terminal may further perform the following step:
The third terminal receives, by using the third link resource, information sent by the second device. The third terminal is a terminal that has a capability of communicating with a satellite in the first communication system and a network device in the second communication system.

The third link resource has a same frequency resource as the second link resource. The second device may send information to both the second terminal and the third terminal by using the third link resource, so that the second device sends information to the two terminals by using the same link resource (that is, the third link resource). This improves communication efficiency. In addition, the third terminal is a terminal that has the capability of communicating with a satellite in the first communication system and a network device in the second communication system. In other words, the third terminal has a cross-communication-system communication capability, so that communication efficiency of the third terminal and mobility of the third terminal can be further improved.

511: The second terminal determines a third link resource.

The third link resource has a same frequency resource as a second link resource, and the second link resource is used, by a first device, for receiving information sent by a first terminal.

512: The second terminal receives, by using the third link resource, the information sent by the second device.

The first device belongs to a first communication system.

The second device belongs to a second communication system.

In some embodiments of this application, that the second terminal determines a third link resource includes:
The second terminal determines whether the third link resource is available, and/or the second terminal determines a third link resource that is available.

In this embodiment of this application, the terminal may uniquely determine, through the foregoing link resource determining process, the link resource that needs to be used by the terminal, so that the device can perform communication by using the link resource.

Further, in some embodiments of this application, that the second terminal determines whether the third link resource is available, and/or the second terminal determines a third link resource that is available includes:
The second terminal determines, based on measurement information, whether the third link resource is available, and/or the third link resource that is available; or
the second terminal determines, based on indication information sent by a mobility management entity, a resource management center, or the second device determines whether the third link resource is available, and/or the third link resource that is available.

In this embodiment of this application, the terminal may uniquely determine, by using the foregoing measurement information or indication information, the link resource that needs to be used by the terminal, so that the terminal can perform communication by using the link resource.

It can be learned from the example in the foregoing embodiment that the first device belongs to the first communication system, and the second device belongs to the second communication system. The second device may determine a third link resource, and the second device may send information to the second terminal by using the third link resource. The third link resource has a same frequency resource as a second link resource, and the second link resource is used, by the first device, for receiving information sent by the first terminal. In other words, the third link resource and the second link resource may share the same frequency resource. For example, the third link resource has a frequency resource completely the same as that of the second link resource, or the third link resource has a frequency resource partially the same as that of the second link resource. In the resource sharing manner of the third link resource and the second link resource, the device and the terminal can use more resources.

FIG. 6 is a schematic flowchart of interaction between a second device and a second terminal according to an embodiment of this application. In an interaction procedure, step 601 and step 602 are described from a side of the second device, and step 611 and step 612 are described from a side of the second terminal. The interaction procedure shown in FIG. 6 mainly includes the following steps.

601: The second device determines a fourth link resource.

The fourth link resource has a same frequency resource as a first link resource, and the first link resource is used for sending information to a first terminal by a first device.

In this embodiment of this application, the second device receives, by using the fourth link resource, information sent by the second terminal. For example, the second device determines the fourth link resource. The fourth link resource may be a fourth spectrum, or information (for example, a band number) related to a fourth band, or a frequency resource (for example, a carrier or a carrier bandwidth) corresponding to the fourth spectrum (or band), or a part (for example, a resource block) of the frequency resource corresponding to the fourth spectrum (or band).

In this embodiment of this application, the fourth link resource has a same frequency resource as the first link resource.

Having the same frequency resource means having at least one or more same resource units. For example, the first link resource includes a resource unit A and a resource unit B. The fourth link resource includes the resource unit B and a resource unit C. In this case, it may be considered that the fourth link resource has the same frequency resource as the first link resource. Specifically, the fourth link resource and the first link resource may share the same frequency resource. For example, the fourth link resource has a frequency resource completely the same as that of the first link resource, or the fourth link resource has a frequency resource partially the same as that of the first link resource. In the resource sharing manner of the fourth link resource and the first link resource, the device and the terminal can use more resources. In addition, the fourth link resource is a link resource used for receiving, by the second device, information sent by the second terminal, and the first link resource is a link resource used for sending information to the first terminal by the first device. The fourth link resource has the same frequency resource as the first link resource. In this way, the second device receives the information and the first device sends the information by using the same frequency resource. This improves communication efficiency. In addition, receiving the information by the second device and sending the information by the first device are two communication processes in completely opposite directions. Considering that terminals of a satellite communication system are sparse, geographical isolation can naturally reduce interference. In addition, when the first device sends the information to the first terminal by using the first link resource, the second device may send the information to the second terminal by using the fourth link resource. In addition, the second device may suppress radiant power of the second device to the air through beamforming, side lobe suppression, or the like. Such interference suppression technologies can further effectively reduce interference received when the second device communicates with the second terminal, and can further reduce interference received when the first device communicates with the first terminal.

In some embodiments of this application, that the second device determines a fourth link resource includes:
The second device determines whether the fourth link resource is available, and/or the second device determines a fourth link resource that is available.

In this embodiment of this application, the device may uniquely determine, through the foregoing link resource determining process, the link resource that needs to be used by the device, so that the device can perform communication by using the link resource.

Further, in some embodiments of this application, that the second device determines whether the fourth link resource is available, and/or the second device determines a fourth link resource that is available includes:
The second device determines, based on measurement information, whether the fourth link resource is available, and/or the fourth link resource that is available; or
the second device determines, based on indication information sent by a mobility management entity, a resource management center, the first device, or a terminal served by the first device, whether the fourth link resource is available, and/or the fourth link resource that is available.

In this embodiment of this application, the device may uniquely determine, by using the foregoing measurement information or indication information, the link resource that needs to be used by the device, so that the device can perform communication by using the link resource.

For example, the second device determines the fourth link resource based on measurement of the second device, or the second device determines the fourth link resource based on measurement reporting of a terminal device served by the second device. For example, determining the fourth link resource may be understood as: determining, by the second device, whether the second terminal can use the fourth link resource. For another example, determining the fourth link resource may be understood as: determining, from the fourth link resource by the second device, a resource that can be used by the second terminal to send information. For another example, determining the fourth link resource may be understood as: determining, from the fourth link resource by the second device, one or more carriers and/or a bandwidth of the carrier.

For example, the second device determines the fourth link resource based on an indication of another device. For example, the another network device may be a mobility management entity, a resource management center, a terrestrial satellite communication device, a satellite device, or a terminal device.

602: The second device receives, by using the fourth link resource, information sent by the second terminal.

The first device belongs to a first communication system.

The second device belongs to a second communication system.

In some embodiments of this application, in addition to 601 and 602 performed by the second device, the communication method provided in this embodiment of this application further includes:
The second device receives, by using the fourth link resource, information sent by a third terminal, where the third terminal is a terminal that has a capability of communicating with a satellite in the first communication system and a network device in the second communication system.

In some embodiments of this application, the third terminal may further perform the following step:

The third terminal sends information to the second device by using the fourth link resource. The third terminal is a terminal that has a capability of communicating with a satellite in the first communication system and a network device in the second communication system.

The fourth link resource has a same frequency resource as the first link resource. The second device may receive information sent from both the second terminal and the third terminal by using the fourth link resource, so that the second device receives information sent from the two terminals by using the same link resource (that is, the fourth link resource). This improves communication efficiency. In addition, the third terminal is a terminal that has the capability of communicating with a satellite in the first communication system and a network device in the second communication system. In other words, the third terminal has a cross-communication-system communication capability, so that communication efficiency of the third terminal can be further improved.

611: The second terminal determines a fourth link resource.

The fourth link resource has a same frequency resource as a first link resource, and the first link resource is used for sending information to a first terminal by a first device.

612: The second terminal sends information to the second device by using the fourth link resource.

The first device belongs to a first communication system.

The second device belongs to a second communication system.

In some embodiments of this application, that the second terminal determines a fourth link resource includes:
The second terminal determines whether the fourth link resource is available, and/or the second terminal determines a fourth link resource that is available.

In this embodiment of this application, the terminal may uniquely determine, through the foregoing link resource determining process, the link resource that needs to be used by the terminal, so that the device can perform communication by using the link resource.

Further, in some embodiments of this application, that the second terminal determines whether the fourth link resource is available, and/or the second terminal determines a fourth link resource that is available includes:
The second terminal determines, based on measurement information, whether the fourth link resource is available, and/or the fourth link resource that is available; or
the second terminal determines, based on indication information sent by a mobility management entity, a resource management center, or the second device, whether the fourth link resource is available, and/or the fourth link resource that is available.

In this embodiment of this application, the terminal may determine, by using the foregoing measurement information or indication information, the link resource that needs to be used by the terminal, so that the terminal can perform communication by using the link resource.

It can be learned from the example in the foregoing embodiment that the first device belongs to the first communication system, and the second device belongs to the second communication system. The second device may determine a fourth link resource, and the second device may use the fourth link resource to receive information sent by the second terminal. The fourth link resource has a same frequency resource as a first link resource. The first link resource is used for sending information to the first terminal by the first device. In other words, the fourth link resource and the first link resource may share the same frequency resource. For example, the fourth link resource has a frequency resource completely the same as that of the first link resource, or the fourth link resource has a frequency resource partially the same as that of the first link resource. In the resource sharing manner of the fourth link resource and the first link resource, the device and the terminal can use more resources.

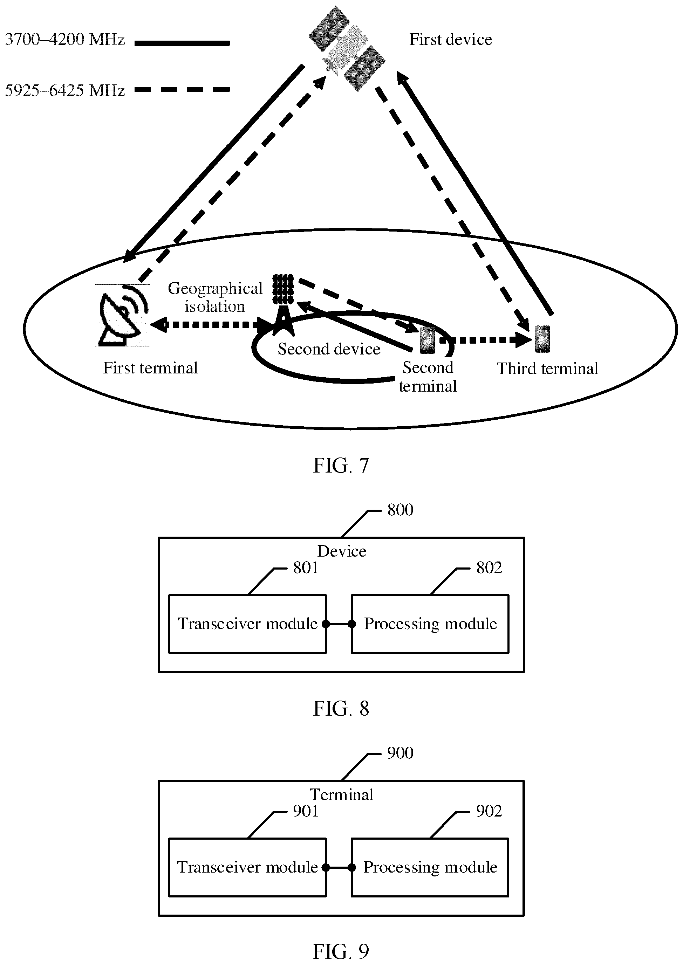

FIG. 7 is a schematic diagram of sharing a frequency resource by a satellite communication system and a cellular communication system according to an embodiment of this application. A first communication system includes a first device and a first terminal, or a first communication system includes a first device and a third terminal, or a first communication system includes a first device, a first terminal, and a third terminal. For example, the first communication system is the satellite communication system. For example, the first device is a satellite. For example, when the first communication system includes the first device and the first terminal, the first terminal is a satellite phone and/or a ground station. For example, when the first communication system includes the first device, the first terminal, and the third terminal, the first terminal is a ground station, and the third terminal is a satellite phone. A second communication system includes a second device and a second terminal. For example, the second communication system is a mobile communication system. For example, the second device is a base station. The second terminal is user equipment.

Refer to Table 1. Frequency resources used by the satellite communication system and the mobile communication system are a first frequency resource and a second frequency resource shown in Table 1.

**Table 1**

| Satellite communication system | | Mobile communication system | |
|---|---|---|---|
| For sending from a satellite to a ground device/terminal | For sending from the ground device/terminal to the satellite | For sending from a base station to a terminal | For sending from the terminal to the base station |
| First frequency resource | Second frequency resource | Second frequency resource | First frequency resource |

Based on the frequency resources used by the satellite communication system and the mobile communication system shown in the foregoing Table 1, the following Table 2 shows frequency resources used by devices and terminals in the satellite communication system and the mobile communication system.

**Table 2**

| | | | | | |
|---|---|---|---|---|---|
| For sending from a satellite to a ground station | For sending from the ground station to the satellite | For sending from the satellite to a satellite terminal | For sending from the satellite terminal to the satellite | For sending from a base station to a terminal | For sending from the terminal to the base station |
| First frequency resource | Second frequency resource | Second frequency resource | First frequency resource | Second frequency resource | First frequency resource |

In some embodiments of this application, a first link resource and a fourth link resource belong to a same spectrum, or a first link resource and a fourth link resource belong to a same band, or some resources in a first link resource and a fourth link resource are the same. In a resource sharing manner of the fourth link resource and the first link resource, the device and the terminal can use more resources. In addition, the fourth link resource is a link resource used for receiving, by the second device, information sent by the second terminal, and the first link resource is a link resource used for sending information to the first terminal by the first device. The fourth link resource has a same frequency resource as the first link resource. In this way, the second device receives the information and the first device sends the information by using the same frequency resource. This improves communication efficiency. In addition, receiving the information by the second device and sending the information by the first device are two communication processes in completely opposite directions. Considering that terminals of the satellite communication system are sparse, geographical isolation can naturally reduce interference. In addition, when the first device sends the information to the first terminal by using the first link resource, the second device may send the information to the second terminal by using the fourth link resource. In addition, the second device may suppress radiant power of the second device to the air through beamforming, side lobe suppression, or the like. Such interference suppression technologies can further effectively reduce interference received when the second device communicates with the second terminal, and can further reduce interference received when the first device communicates with the first terminal.

Optionally, in some embodiments of this application, the first link resource and a sixth link resource belong to a same spectrum, or the first link resource and a sixth link resource belong to a same band, or some resources in the first link resource and a sixth link resource are the same. In a resource sharing manner of the first link resource and the sixth link resource, the device and/or the terminal can use more resources. In addition, the first link resource is a link resource used for sending information to the first terminal by the first device. In addition, the sixth link resource is a link resource used for receiving from the third terminal by the first device. The first link resource has a same frequency resource as the sixth link resource. In this way, the first device performs both sending and receiving by using the same frequency resource. This improves communication efficiency.

Optionally, in some embodiments of this application, the fourth link resource and the sixth link resource belong to a same spectrum, or the fourth link resource and the sixth link resource belong to a same band, or some resources in the fourth link resource and the sixth link resource are the same. The third terminal may use the foregoing sixth link resource, so that communication efficiency of the third terminal and mobility of the third terminal can be improved.

Optionally, in some embodiments of this application, the first link resource, the fourth link resource, and the sixth link resource belong to a same spectrum, or the first link resource, the fourth link resource, and the sixth link resource belong to a same band, or some resources in the first link resource, the fourth link resource, and the sixth link resource are the same.

In some embodiments of this application, a second link resource and a third link resource belong to a same spectrum, or a second link resource and a third link resource belong to a same band, or some resources in a second link resource and a third link resource are the same. In a resource sharing manner of the third link resource and the second link resource, the device and the terminal can use more resources. In addition, the third link resource is a link resource used for receiving, by the second device, information sent by the second terminal, and the second link resource is a link resource used for receiving information by the first device. The third link resource has a same frequency resource as the second link resource. In this way, the second device sends the information and the first device receives the information by using the same frequency resource. This improves communication efficiency. In addition, sending the information by the second device and receiving the information by the first device are two communication processes in completely opposite directions. Considering that terminals of the satellite communication system are sparse, geographical isolation can naturally reduce interference. In addition, when the first device receives, by using the second link resource, the information sent by the first terminal, the second device may send the information to the second terminal by using the third link resource. In addition, the second device may suppress radiant power of the second device to the air through beamforming, side lobe suppression, or the like. Such interference suppression technologies can further effectively reduce interference received when the second device communicates with the second terminal, and can further reduce interference received when the first device communicates with the first terminal.

Optionally, in some embodiments of this application, the second link resource and a fifth link resource belong to a same spectrum, or the second link resource and a fifth link resource belong to a same band, or some resources in the second link resource and a fifth link resource are the same. In a resource sharing manner of the second link resource and the fifth link resource, the device and the terminal can use more resources. In addition, the second link resource is a link resource used, by the first device, for receiving information sent by the first terminal, and the fifth link resource is a link resource used for sending information to the third terminal by the first device. The second link resource has the same frequency resource as the fifth link resource. In this way, the first device performs both sending and receiving by using the same frequency resource. This improves communication efficiency.

Optionally, in some embodiments of this application, the third link resource and the fifth link resource belong to a same spectrum, or the third link resource and the fifth link resource belong to a same band, or some resources in the third link resource and the fifth link resource are the same. The third terminal may use the foregoing fifth link resource, so that communication efficiency of the third terminal and mobility of the third terminal can be improved.

Optionally, in some embodiments of this application, the second link resource, the third link resource, and the fifth link resource belong to a same spectrum, or the second link resource, the third link resource, and the fifth link resource belong to a same band, or some resources in the second link resource, the third link resource, and the fifth link resource are the same.

For example, at least one of the first link resource, the fourth link resource, and the sixth link resource is a spectrum resource or a band resource used by a satellite in current satellite communication to send information to a ground device or a terminal.

For example, at least one of the second link resource, the third link resource, and the fifth link resource is a spectrum resource or a band resource used by a ground device (or a terminal) in current satellite communication to send information to a satellite.

The following Table 3 shows a schematic diagram of using a spectrum or a band of a current satellite system.

**Table 3**

| Satellite service type | Band (a satellite to the ground or a satellite to a satellite terminal) | Band (the ground to a satellite, or a satellite terminal to a satellite) |
|---|---|---|
| Satellite broadcast service | L band: | -- |
| | 1452-1467 MHz | |
| | 1467-1492 MHz | |
| | X band: 11.7-12.2 GHz | |
| Mobile satellite service | | L band: 1610-1660.5 MHz |
| | L band: 1518-1559 MHz | 1668-1675 MHz |
| | | S-band: 1980-2010 MHz |
| | S-band: 2170-2200 MHz | 2500-2520 MHz |
| | 2483.5-2500 MHz | 2670-2690 MHz |

It can be learned from the foregoing example that, in a method for using a spectrum resource between a device and a terminal in this embodiment of this application, interference between the mobile communication system and the satellite communication system can be reduced. Particularly, considering that terminals of the satellite communication system are sparse, when the first device sends information to the first terminal by using a first spectrum, the second device may receive, by using a spectrum the same as the first spectrum, information sent by the second terminal. In addition, the second device may suppress, by using a technology such as beamforming, interference caused by downlink transmission of the first device, to reduce interference to information receiving of the first terminal.

When the first device receives, by using a second spectrum, information sent by the first terminal, the second device may send information to the second terminal by using a spectrum the same as the second spectrum. In addition, the second device may suppress, by using a technology such as beamforming, interference caused by uplink sending of the first terminal, to reduce interference to downlink receiving of the second terminal.

Further, the first device may receive, by using the first spectrum, information sent by the third terminal, and the first device may send information to the third terminal by using the second spectrum. Because a spectrum used by the first device to send information to the third terminal may be the same as (completely the same as or partially the same as) a spectrum used by the second device to send information to the second terminal, the third terminal may determine, based on a channel condition, a service requirement, or the like, whether to be served by the second device or the first device. This improves mobility and service continuity of the third terminal.

For example, considering that terminals of the satellite communication system are sparse, when the first device performs downlink sending with the first terminal by using the first spectrum, the second device may receive uplink information of the second terminal by using a spectrum (that is, a fourth spectrum) the same as the first spectrum. In addition, the second device may suppress, by using a technology such as beamforming, interference caused by downlink transmission of the first device, to reduce interference to downlink receiving of the first terminal.

Considering that terminals of the satellite communication system are sparse, when the first device receives uplink information of the first terminal by using the second spectrum, the second device may send first link information to the second terminal by using a spectrum (that is, a third spectrum) the same as the second spectrum. In addition, the second device may suppress, by using a technology such as beamforming, interference caused by uplink transmission of the first terminal, to reduce interference to uplink sending of the first terminal.

According to the implementation method in embodiments of this application, the mobile communication system can use abundant spectrum resources for satellite communication, to greatly meet a high-rate requirement of mobile communication, increase a system capacity, and improve user experience. In addition, in the spectrum resource usage manners in embodiments of this application, mutual interference between the mobile communication system and the satellite communication system can be reduced, and spectrum resources are effectively used.

In embodiments provided in this application, the methods provided in embodiments of this application are respectively described from perspectives of a device, a terminal, and interaction between the device and the terminal. To implement the functions in the methods provided in embodiments of this application, the network device and the terminal device each may include a hardware structure and/or a software module, to implement the foregoing functions in a form of the hardware structure, the software module, or a combination of the hardware structure and the software module. Whether one of the foregoing functions is performed in the manner of a hardware structure, a software module, or a hardware structure and a software module depends on a specific application and configuration design constraints of the technical solutions.

It should be noted that, for brevity, the foregoing method embodiments are represented as a series of actions. But a person skilled in the art should appreciate that embodiments of this application are not limited to the order of the described actions, because according to embodiments of this application, some steps may be performed in another order or performed simultaneously.

To better implement the solutions of embodiments of this application, a related apparatus for implementing the solutions is further provided below.

As shown in FIG. 8, an embodiment of this application provides a communication apparatus. The communication apparatus may be the foregoing first device or second device, or an apparatus in the first device or the second device, or an apparatus that can be used with the first device or the second device. FIG. 8 shows an example in which the communication apparatus is a device 800. For example, the device 800 may include a transceiver module 801 and a processing module 802.

In a possible implementation, the communication apparatus is a first device, and the first device includes:
a processing module, configured to determine a first link resource, where the first link resource is used for sending information to a first terminal by the first device, where
the processing module is further configured to determine a sixth link resource, where the sixth link resource is used, by the first device, for receiving information sent by a third terminal;
the first link resource has a same frequency resource as the sixth link resource; and
the first device belongs to a first communication system.

In a possible implementation, the processing module is configured to determine whether the sixth link resource is available, and/or determine, by the first device, a sixth link resource that is available.

In a possible implementation, the processing module is configured to determine, based on measurement information, whether the sixth link resource is available, and/or the sixth link resource that is available; or determine, based on indication information sent by a first satellite in the first communication system, a mobility management entity, a resource management center, a terminal served by the first device, or a network device in a second communication system, whether the sixth link resource is available, and/or the sixth link resource that is available.

In a possible implementation, the communication apparatus is a first device, and the first device includes:
a processing module, configured to determine a second link resource, where the second link resource is used, by the first device, for receiving information sent by a first terminal, where
the processing module is further configured to determine a fifth link resource, where the fifth link resource is used for sending information to a third terminal by the first device;
the second link resource has a same frequency resource as the fifth link resource; and
the first device belongs to a first communication system.

In a possible implementation, the processing module is configured to determine whether the fifth link resource is available, and/or determine, by the first device, a fifth link resource that is available.

In a possible implementation, the processing module is configured to determine, based on measurement information, whether the fifth link resource is available, and/or the fifth link resource that is available; or
determine, by the first device based on indication information sent by a first satellite in the first communication system, a mobility management entity, a resource management center, a terminal served by the first device, or a network device in a second communication system, whether the fifth link resource is available, and/or the fifth link resource that is available.

In a possible implementation, the communication apparatus is a second device, and the second device includes:
a processing module, configured to determine a third link resource, where
the third link resource has a same frequency resource as a second link resource, and the second link resource is used, by a first device, for receiving information sent by a first terminal;
the processing module is configured to send, by using a transceiver module, information to a second terminal by using the third link resource;
the first device belongs to a first communication system; and
the second device belongs to a second communication system.

In a possible implementation, the processing module is configured to send, by using the transceiver module, information to a third terminal by using the third link resource, where the third terminal is a terminal that has a capability of communicating with a satellite in the first communication system and a network device in the second communication system.

In a possible implementation, the processing module is configured to determine whether the third link resource is available, and/or determine, by the second device, a third link resource that is available.

In a possible implementation, the processing module is configured to determine, based on measurement information, whether the third link resource is available, and/or the third link resource that is available; or determine, based on indication information sent by a mobility management entity, a resource management center, the first device, or a terminal served by the first device, whether the third link resource is available, and/or the third link resource that is available.

In a possible implementation, the communication apparatus is a second device, and the second device includes:
a processing module, configured to determine a fourth link resource, where
the fourth link resource has a same frequency resource as a first link resource, and the first link resource is used for sending information to a first terminal by a first device;
the processing module is configured to receive, by using a transceiver module and by using the fourth link resource, information sent by a second terminal;
the first device belongs to a first communication system; and
the second device belongs to a second communication system.

In a possible implementation, the processing module is configured to receive, by using the transceiver module and by using the fourth link resource, information sent by a third terminal, where the third terminal is a terminal that has a capability of communicating with a satellite in the first communication system and a network device in the second communication system.

In a possible implementation, the processing module is configured to determine whether the fourth link resource is available, and/or determine, by the second device, a fourth link resource that is available.

In a possible implementation, the processing module is configured to determine, based on measurement information, whether the fourth link resource is available, and/or the fourth link resource that is available; or determine, based on indication information sent by a mobility management entity, a resource management center, the first device, or a terminal served by the first device, whether the fourth link resource is available, and/or the fourth link resource that is available.

As shown in FIG. 9, an embodiment of this application provides a communication apparatus. The communication apparatus may be the foregoing second terminal or third terminal, or an apparatus in the foregoing second terminal or third terminal, or an apparatus that can be used with the second terminal or the third terminal. FIG. 9 is shown by using an example in which the communication apparatus is a terminal 900. The terminal 900 may include a transceiver module 901 and a processing module 902.

In a possible implementation, the communication apparatus is a second terminal, and the second terminal includes:
a processing module, configured to determine a third link resource, where
the third link resource has a same frequency resource as a second link resource, and the second link resource is used, by a first device, for receiving information sent by a first terminal;
the processing module is configured to receive, by using a transceiver module and by using the third link resource, information sent by a second device;
the first device belongs to a first communication system; and
the second device belongs to a second communication system.

In a possible implementation, the processing module is configured to determine whether the third link resource is available, and/or determine, by the second terminal, a third link resource that is available.

In a possible implementation, the processing module is configured to determine, based on measurement information, whether the third link resource is available, and/or the third link resource that is available; or determine, based on indication information sent by a mobility management entity, a resource management center, or the second device, whether the third link resource is available, and/or the third link resource that is available.

In a possible implementation, the communication apparatus is a second terminal, and the second terminal includes:
a processing module, configured to determine a fourth link resource, where
the fourth link resource has a same frequency resource as a first link resource, and the first link resource is used for sending information to a first terminal by a first device;
the processing module is configured to send, by using a transceiver module, information to a second device by using the fourth link resource;
the first device belongs to a first communication system; and
the second device belongs to a second communication system.

In a possible implementation, the processing module is configured to determine whether the fourth link resource is available, and/or determine, by the second terminal, a fourth link resource that is available.

In a possible implementation, the processing module is configured to determine, based on measurement information, whether the fourth link resource is available, and/or the fourth link resource that is available; or determine, based on indication information sent by a mobility management entity, a resource management center, or the second device, whether the fourth link resource is available, and/or the fourth link resource that is available.

In a possible implementation, the communication apparatus is a third terminal, and the third terminal includes:
a processing module, configured to determine a sixth link resource, where
the sixth link resource has a same frequency resource as a first link resource, and the first link resource is used for sending information to a first terminal by a first device;
the processing module is configured to send, by using a transceiver module, information to the first device by using the sixth link resource; and
the first device belongs to a first communication system.

In a possible implementation, the processing module is configured to determine whether the sixth link resource is available, and/or determine, by the third terminal, a sixth link resource that is available.

In a possible implementation, the processing module is configured to determine, based on measurement information, whether the sixth link resource is available, and/or the sixth link resource that is available; or determine, based on indication information sent by a first satellite in the first communication system, a mobility management entity, a resource management center, a terminal served by the first device, or a network device in a second communication system, whether the sixth link resource is available, and/or the sixth link resource that is available.

In a possible implementation, the communication apparatus is a third terminal, and the third terminal includes:
a processing module, configured to determine a fifth link resource, where
the fifth link resource has a same frequency resource as a second link resource, and the second link resource is used, by a first device, for receiving information sent by a first terminal;
the processing module is configured to receive, by using a transceiver module and by using the sixth link resource, information sent by the first device; and
the first device belongs to a first communication system.

In a possible implementation, the processing module is configured to determine whether the fifth link resource is available, and/or determine, by the third terminal, a fifth link resource that is available.

In a possible implementation, the processing module is configured to determine, based on measurement information, whether the fifth link resource is available, and/or the fifth link resource that is available; or
determine, by the third terminal based on indication information sent by a first satellite in the first communication system, a mobility management entity, a resource management center, a terminal served by the third terminal, or a network device in a second communication system, whether the fifth link resource is available, and/or the fifth link resource that is available.

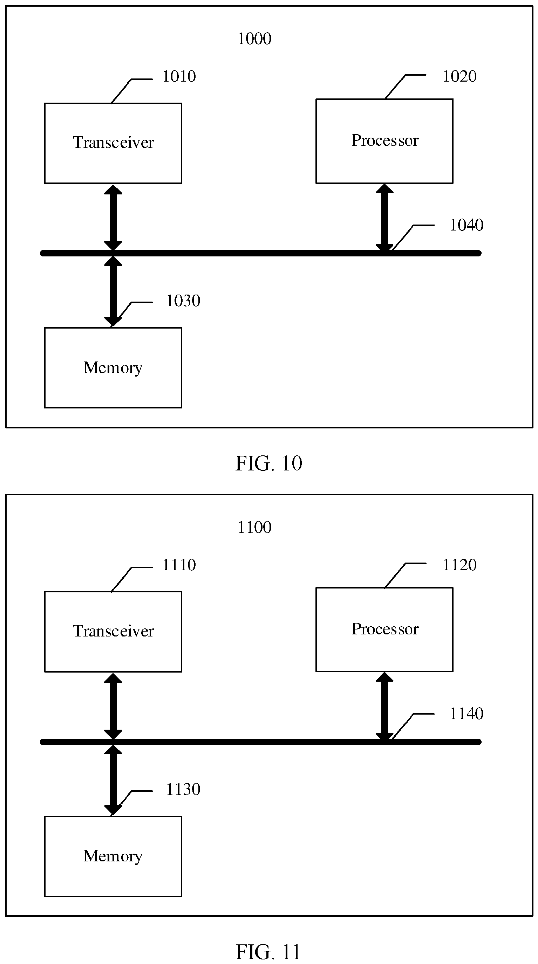

FIG. 10 shows an apparatus 1000 according to an embodiment of this application. The apparatus 1000 may be the foregoing first device or second device, and is configured to implement functions of the first device or the second device in the foregoing methods. The apparatus may be the first device or the second device, or an apparatus in the first device or the second device, or an apparatus that can be used with the first device or the second device. The apparatus may be a chip system. In this embodiment of this application, the chip system may include a chip, or may include a chip and another discrete device. The apparatus 1000 includes at least one processor 1020, configured to implement the functions of the first device or the second device in the methods provided in embodiments of this application. For example, the processor 1020 may receive information such as downlink control information and configuration information of a control resource set, and parse the information. For details, refer to detailed descriptions in the method examples. Details are not described herein.

The apparatus 1000 may further include at least one memory 1030, configured to store program instructions and/or data. The memory 1030 is coupled to the processor 1020. The coupling in this embodiment of this application is indirect coupling or a communication connection between apparatuses, units, or modules for information exchange between the apparatuses, the units, or the modules, and may be in electrical, mechanical, or other forms. The processor 1020 may cooperate with the memory 1030. The processor 1020 may execute the program instructions stored in the memory 1030. At least one of the at least one memory may be included in the processor, and the apparatus 1000 may further include a communication interface. The communication interface has a plurality of implementations. For example, the communication interface may be a transceiver, an interface, a bus, a circuit, a pin, or an apparatus that can implement a transceiver function. In FIG. 10, an example in which the communication interface is a transceiver 1010 is used for description. The transceiver 1010 is configured to communicate with another device by using a transmission medium, so that the apparatus in the apparatus 1000 can communicate with the another device. For example, the another device may be a network device. The processor 1020 receives and sends data by using the transceiver 1010, and is configured to implement the method performed by the first device or the second device in the embodiments corresponding to FIG. 3 and FIG. 4.

In this embodiment of this application, a specific connection medium between the transceiver 1010, the processor 1020, and the memory 1030 is not limited. In this embodiment of this application, the memory 1030, the processor 1020, and the transceiver 1010 are connected by using a bus 1040 in FIG. 10. The bus is represented by using a bold line in FIG. 10. The foregoing is merely an example for description. A connection manner of other components is not limited thereto. The bus may be classified into an address bus, a data bus, a control bus, and the like. For ease of representation, only one thick line is for representing the bus in FIG. 10, but this does not mean that there is only one bus or only one type of bus.

FIG. 11 shows an apparatus 1100 according to an embodiment of this application. The apparatus 1100 may be the foregoing second terminal or third terminal, and is configured to implement functions of the second terminal or the third terminal in the foregoing methods. The apparatus may be the second terminal or the third terminal, or an apparatus in the second terminal or the third terminal, or an apparatus that can be used with the second terminal or the third terminal. The apparatus may be a chip system. The apparatus 1100 includes at least one processor 1120, configured to implement the functions of the second terminal or the third terminal in the methods provided in embodiments of this application. For example, the processor 1120 may generate and send information such as downlink control information and configuration information of a control resource set. For details, refer to detailed descriptions in the method examples. Details are not described herein.

The apparatus 1100 may further include at least one memory 1130, configured to store program instructions and/or data. The memory 1130 is coupled to the processor 1120. The coupling in this embodiment of this application is indirect coupling or a communication connection between apparatuses, units, or modules for information exchange between the apparatuses, the units, or the modules, and may be in electrical, mechanical, or other forms. The processor 1120 may cooperate with the memory 1130. The processor 1120 may execute the program instructions stored in the memory 1130. At least one of the at least one memory may be included in the processor, and the apparatus 1100 may further include a communication interface. The communication interface has a plurality of implementations. For example, the communication interface may be a transceiver, an interface, a bus, a circuit, or an apparatus that can implement a transceiver function. In FIG. 11, an example in which the communication interface is a transceiver 1110 is used for description. The transceiver 1110 is configured to communicate with another device by using a transmission medium, so that the apparatus in the apparatus 1100 can communicate with the another device. For example, the another device may be a terminal device. The processor 1120 receives and sends data by using the transceiver 1110, and is configured to implement the method performed by the second terminal or the third terminal in the embodiments corresponding to FIG. 5 and FIG. 6.

In this embodiment of this application, a specific connection medium between the transceiver 1110, the processor 1120, and the memory 1130 is not limited. In this embodiment of this application, the memory 1130, the processor 1120, and the transceiver 1110 are connected by using a bus 1140 in FIG. 11. The bus is represented by using a bold line in FIG. 11. The foregoing is merely an example for description. A connection manner of other components is not limited thereto. The bus may be classified into an address bus, a data bus, a control bus, and the like. For ease of representation, only one thick line is for representing the bus in FIG. 11, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

In embodiments of this application, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

All or some of the technical solutions provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, comprising:
determining, by a first device, a first link resource, wherein the first link resource is used for sending information to a first terminal by the first device; and
determining, by the first device, a sixth link resource, wherein the sixth link resource is used, by the first device, for receiving information sent by a third terminal, wherein
the first link resource has a same frequency resource as the sixth link resource; and
the first device belongs to a first communication system.

2. The method according to claim 1, wherein the determining, by the first device, a sixth link resource comprises:
determining, by the first device, whether the sixth link resource is available, and/or determining, by the first device, a sixth link resource that is available.

3. The method according to claim 2, wherein the determining, by the first device, whether the sixth link resource is available, and/or determining, by the first device, a sixth link resource that is available comprises:
determining, by the first device based on measurement information, whether the sixth link resource is available, and/or the sixth link resource that is available; or
determining, by the first device based on indication information sent by a first satellite in the first communication system, a mobility management entity, a resource management center, a terminal served by the first device, or a network device in a second communication system, whether the sixth link resource is available, and/or the sixth link resource that is available.

4. A communication method, comprising:
determining, by a first device, a second link resource, wherein the second link resource is used for receiving information sent by a first terminal by the first device; and
determining, by the first device, a fifth link resource, wherein the fifth link resource is used for sending information to a third terminal by the first device, wherein
the second link resource has a same frequency resource as the fifth link resource; and
the first device belongs to a first communication system.

5. The method according to claim 4, wherein the determining, by the first device, a fifth link resource comprises:
determining, by the first device, whether the fifth link resource is available, and/or determining, by the first device, a fifth link resource that is available.

6. The method according to claim 5, wherein the determining, by the first device, whether the fifth link resource is available, and/or determining, by the first device, a fifth link resource that is available comprises:
determining, by the first device based on measurement information, whether the fifth link resource is available, and/or the fifth link resource that is available; or
determining, by the first device based on indication information sent by a first satellite in the first communication system, a mobility management entity, a resource management center, a terminal served by the first device, or a network device in a second communication system, whether the fifth link resource is available, and/or the fifth link resource that is available.

7. A communication method, comprising:
determining, by a second device, a third link resource, wherein
the third link resource has a same frequency resource as a second link resource, and the second link resource is used, by a first device, for receiving information sent by a first terminal; and
sending, by the second device, information to a second terminal by using the third link resource, wherein
the first device belongs to a first communication system; and
the second device belongs to a second communication system.

8. The method according to claim 7, further comprising:
sending, by the second device, information to a third terminal by using the third link resource, wherein the third terminal is a terminal that has a capability of communicating with a satellite in the first communication system and a network device in the second communication system.

9. The method according to claim 7 or 8, wherein the determining, by a second device, a third link resource comprises:
determining, by the second device, whether the third link resource is available, and/or determining, by the second device, a third link resource that is available.

10. The method according to claim 9, wherein the determining, by the second device, whether the third link resource is available, and/or determining, by the second device, a third link resource that is available comprises:
determining, by the second device based on measurement information, whether the third link resource is available, and/or the third link resource that is available; or
determining, by the second device based on indication information sent by a mobility management entity, a resource management center, the first device, or a terminal served by the first device, whether the third link resource is available, and/or the third link resource that is available.

11. A communication method, comprising:
determining, by a second device, a fourth link resource, wherein
the fourth link resource has a same frequency resource as a first link resource, and the first link resource is used for sending information to a first terminal by a first device; and
receiving, by the second device by using the fourth link resource, information sent by a second terminal, wherein
the first device belongs to a first communication system; and
the second device belongs to a second communication system.

12. The method according to claim 11, further comprising:
receiving, by the second device by using the fourth link resource, information sent by a third terminal, wherein the third terminal is a terminal that has a capability of communicating with a satellite in the first communication system and a network device in the second communication system.

13. The method according to claim 11 or 12, wherein the determining, by a second device, a fourth link resource comprises:
determining, by the second device, whether the fourth link resource is available, and/or determining, by the second device, a fourth link resource that is available.

14. The method according to claim 13, wherein the determining, by the second device, whether the fourth link resource is available, and/or determining, by the second device, a fourth link resource that is available comprises:
determining, by the second device based on measurement information, whether the fourth link resource is available, and/or the fourth link resource that is available; or
determining, by the second device based on indication information sent by a mobility management entity, a resource management center, the first device, or a terminal served by the first device, whether the fourth link resource is available, and/or the fourth link resource that is available.

15. A communication method, comprising:
determining, by a second terminal, a third link resource, wherein
the third link resource has a same frequency resource as a second link resource, and the second link resource is used, by a first device, for receiving information sent by a first terminal; and
receiving, by the second terminal by using the third link resource, information sent by a second device, wherein
the first device belongs to a first communication system; and
the second device belongs to a second communication system.

16. The method according to claim 15, wherein the determining, by a second terminal, a third link resource comprises:
determining, by the second terminal, whether the third link resource is available, and/or determining, by the second terminal, a third link resource that is available.

17. The method according to claim 16, wherein the determining, by the second terminal, whether the third link resource is available, and/or determining, by the second terminal, a third link resource that is available comprises:
determining, by the second terminal based on measurement information, whether the third link resource is available, and/or the third link resource that is available; or
determining, by the second terminal based on indication information sent by a mobility management entity, a resource management center, or the second device, whether the third link resource is available, and/or the third link resource that is available.

18. A communication method, comprising:
determining, by a second terminal, a fourth link resource, wherein
the fourth link resource has a same frequency resource as a first link resource, and the first link resource is used for sending information to a first terminal by a first device; and
sending, by the second terminal, information to a second device by using the fourth link resource, wherein
the first device belongs to a first communication system; and
the second device belongs to a second communication system.

19. The method according to claim 18, wherein the determining, by a second terminal, a fourth link resource comprises:
determining, by the second terminal, whether the fourth link resource is available, and/or determining, by the second terminal, a fourth link resource that is available.

20. The method according to claim 19, wherein the determining, by the second terminal, whether the fourth link resource is available, and/or determining, by the second terminal, a fourth link resource that is available comprises:
determining, by the second terminal based on measurement information, whether the fourth link resource is available, and/or the fourth link resource that is available; or
determining, by the second terminal based on indication information sent by a mobility management entity, a resource management center, or the second device, whether the fourth link resource is available, and/or the fourth link resource that is available.

21. A communication method, comprising:
determining, by a third terminal, a sixth link resource, wherein
the sixth link resource has a same frequency resource as a first link resource, and the first link resource is used for sending information to a first terminal by a first device; and
sending, by the third terminal, information to the first device by using the sixth link resource, wherein
the first device belongs to a first communication system.

22. The method according to claim 21, wherein the determining, by a third terminal, a sixth link resource comprises:
determining, by the third terminal, whether the sixth link resource is available, and/or determining, by the third terminal, a sixth link resource that is available.

23. The method according to claim 22, wherein the determining, by the third terminal, whether the sixth link resource is available, and/or determining, by the third terminal, a sixth link resource that is available comprises:
determining, by the third terminal based on measurement information, whether the sixth link resource is available, and/or the sixth link resource that is available; or
determining, by the third terminal based on indication information sent by a first satellite in the first communication system, a mobility management entity, a resource management center, a terminal served by the first device, or a network device in a second communication system, whether the sixth link resource is available, and/or the sixth link resource that is available.

24. A communication method, comprising:
determining, by a third terminal, a fifth link resource, wherein
the fifth link resource has a same frequency resource as a second link resource, and the second link resource is used, by a first device, for receiving information sent by a first terminal; and
receiving, by the third terminal by using the fifth link resource, information sent by the first device, wherein
the first device belongs to a first communication system.

25. The method according to claim 24, wherein the determining, by a third terminal, a fifth link resource comprises:
determining, by the third terminal, whether the fifth link resource is available, and/or determining, by the third terminal, a fifth link resource that is available.

26. The method according to claim 25, wherein the determining, by the third terminal, whether the fifth link resource is available, and/or determining, by the third terminal, a fifth link resource that is available comprises:
determining, by the third terminal based on measurement information, whether the fifth link resource is available, and/or the fifth link resource that is available; or
determining, by the third terminal based on indication information sent by a first satellite in the first communication system, a mobility management entity, a resource management center, a terminal served by the third terminal, or a network device in a second communication system, whether the fifth link resource is available, and/or the fifth link resource that is available.

27. A communication apparatus, wherein the communication apparatus is a first device, and the first device comprises:
a processing module, configured to determine a first link resource, wherein the first link resource is used for sending information to a first terminal by the first device, wherein
the processing module is further configured to determine a sixth link resource, wherein the sixth link resource is used, by the first device, for receiving information sent by a third terminal;
the first link resource has a same frequency resource as the sixth link resource; and
the first device belongs to a first communication system.

28. A communication apparatus, wherein the communication apparatus is a first device, and the first device comprises:
a processing module, configured to determine a second link resource, wherein the second link resource is used, by the first device, for receiving information sent by a first terminal, wherein
the processing module is further configured to determine a fifth link resource, wherein the fifth link resource is used for sending information to a third terminal by the first device;
the second link resource has a same frequency resource as the fifth link resource; and
the first device belongs to a first communication system.

29. A communication apparatus, wherein the communication apparatus is a second device, and the second device comprises:
a processing module, configured to determine a third link resource, wherein
the third link resource has a same frequency resource as a second link resource, and the second link resource is used, by a first device, for receiving information sent by a first terminal;
the processing module is configured to send, by using a transceiver module, information to a second terminal by using the third link resource;
the first device belongs to a first communication system; and
the second device belongs to a second communication system.

30. A communication apparatus, wherein the communication apparatus is a second device, and the second device comprises:
a processing module, configured to determine a fourth link resource, wherein
the fourth link resource has a same frequency resource as a first link resource, and the first link resource is used for sending information to a first terminal by a first device;
the processing module is configured to receive, by using a transceiver module and by using the fourth link resource, information sent by a second terminal;
the first device belongs to a first communication system; and
the second device belongs to a second communication system.

31. A communication apparatus, wherein the communication apparatus is a second terminal, and the second terminal comprises:
a processing module, configured to determine a third link resource, wherein
the third link resource has a same frequency resource as a second link resource, and the second link resource is used, by a first device, for receiving information sent by a first terminal;
the processing module is configured to receive, by using a transceiver module and by using the third link resource, information sent by a second device;
the first device belongs to a first communication system; and
the second device belongs to a second communication system.

32. A communication apparatus, wherein the communication apparatus is a second terminal, and the second terminal comprises:
a processing module, configured to determine a fourth link resource, wherein
the fourth link resource has a same frequency resource as a first link resource, and the first link resource is used for sending information to a first terminal by a first device;
the processing module is configured to send, by using a transceiver module, information to a second device by using the fourth link resource;
the first device belongs to a first communication system; and
the second device belongs to a second communication system.

33. A communication apparatus, wherein the communication apparatus is a third terminal, and the third terminal comprises:
a processing module, configured to determine a sixth link resource, wherein
the sixth link resource has a same frequency resource as a first link resource, and the first link resource is used for sending information to a first terminal by a first device;
the processing module is configured to send, by using a transceiver module, information to the first device by using the sixth link resource; and
the first device belongs to a first communication system.

34. A communication apparatus, wherein the communication apparatus is a third terminal, and the third terminal comprises:
a processing module, configured to determine a fifth link resource, wherein
the fifth link resource has a same frequency resource as a second link resource, and the second link resource is used, by a first device, for receiving information sent by a first terminal;
the processing module is configured to receive, by using a transceiver module and by using the sixth link resource, information sent by the first device; and
the first device belongs to a first communication system.

35. A communication apparatus, wherein the communication apparatus comprises a processor and a memory, and the processor and the memory communicate with each other;
the memory is configured to store instructions; and
the processor is configured to execute the instructions in the memory, to perform the method according to any one of claims 1 to 26.

36. A computer-readable storage medium, comprising instructions, wherein when the instructions are run on a computer, the computer is enabled to perform the method according to any one of claims 1 to 26.
